(19) Europäisches Patentamt
European Patent Office
Office européen des brevets

(11) **EP 3 772 584 B1**

(12) **EUROPÄISCHE PATENTSCHRIFT**

(45) Veröffentlichungstag und Bekanntmachung des Hinweises auf die Patenterteilung:
**06.09.2023   Patentblatt 2023/36**

(21) Anmeldenummer: **20187927.7**

(22) Anmeldetag: **27.07.2020**

(51) Internationale Patentklassifikation (IPC):
**F03D 7/02** *(2006.01)*      **F03D 7/04** *(2006.01)*

(52) Gemeinsame Patentklassifikation (CPC):
**F03D 7/0284; F03D 7/048;** F05B 2270/1033;
F05B 2270/337; Y02E 10/72

(54) **STEUERUNG EINES WINDPARKS**

WIND FARM CONTROL

COMMANDE D'UN PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2019   DE 102019121413**

(43) Veröffentlichungstag der Anmeldung:
**10.02.2021   Patentblatt 2021/06**

(73) Patentinhaber: **Wobben Properties GmbH**
**26607 Aurich (DE)**

(72) Erfinder: **BUSKER, Kai**
**26629 Großefehn (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 2 876 768       WO-A1-2014/012789**
**US-A1- 2011 301 769    US-A1- 2017 335 824**

EP 3 772 584 B1

**Beschreibung**

Die vorliegende Erfindung betrifft ein Verfahren zum Steuern einer mehrere Windenergieanlagen aufweisenden Anlagengruppe. Eine solche Anlagengruppe kann ein Windpark sein, ein Windpark kann aber auch mehrere Anlagengruppen umfassen. Außerdem betrifft die vorliegende Erfindung eine mehrere Windenergieanlagen aufweisende Anlagengruppe und die vorliegende Erfindung betrifft einen Windpark. Die Anlagengruppe kann synonym auch als Windenergieanlagengruppe bezeichnet werden.

Windenergieanlagen sind bekannt, sie erzeugen elektrische Leistung aus Wind und speisen diese in ein elektrisches Versorgungsnetz ein, nämlich an einem Netzanschlusspunkt. Der Anteil elektrischer Leistung, die durch Windenergieanlagen in ein elektrisches Versorgungsnetz eingespeist wird, nimmt in der Welt und besonders in einigen Ländern stark zu, sodass elektrische Leistung von Windenergieanlagen auch bei Überlegungen einer Netzstützung des elektrischen Versorgungsnetzes in Betracht gezogen wird.

Idealerweise speist ein Windpark so viel elektrische Leistung in das elektrische Versorgungsnetz ein wie aufgrund des vorherrschenden Windes und der Kapazität des Windparks bzw. seiner Windenergieanlagen und des Netzanschlusspunktes möglich ist. Zur Stützung des elektrischen Versorgungsnetzes kommt dabei in Betracht, dass ein Netzbetreiber des elektrischen Versorgungsnetzes, oder eine andere Stelle, zeitweise eine Leistungsreduzierung am Netzanschlusspunkt fordern kann.

Eine solche Leistungsreduzierung kann besonders als absoluter Leistungswert an den Windpark übertragen werden, sodass der Windpark seine eingespeiste Leistung auf diesen absoluten Leistungswert begrenzen muss. Zur Umsetzung kann dieser absolute Leistungswert auf die einzelnen Windenergieanlagen aufgeteilt werden. Befinden sich beispielsweise zehn Windenergieanlagen in dem Windpark, so kann der vorgegebene absolute Leistungswert so aufgeteilt werden, dass jede Windenergieanlage im Windpark auf ein Zehntel dieses absoluten Leistungswertes begrenzt wird.

Ist aber beispielsweise eine Windenergieanlage der beispielhaft genannten zehn Windenergieanlagen in dem Windpark nicht in Betrieb, weil sie zum Beispiel in einem Wartungsmodus ist, könnte sie gar keine Leistung einspeisen. Würden die übrigen neun Windenergieanlagen trotzdem nur ein Zehntel des Begrenzungswertes an Leistung einspeisen, würde der Windpark insgesamt zu wenig Leistung einspeisen.

Ähnliche Probleme können auch auftreten, wenn der Windpark als Mischpark ausgebildet ist, in dem unterschiedliche Windenergieanlagen betrieben werden, besonders Windenergieanlagen unterschiedlicher Größe. In diesem Fall könnte eine kleine Windenergieanlage einen Leistungswert als Begrenzung erhalten, den sie gar nicht erreicht. Auch dann ergebe sich der unerwünschte Effekt, dass der Windpark zu wenig Leistung einspeist.

Eine Möglichkeit, unterschiedliche Windenergieanlagengrößen zu berücksichtigen, kann darin bestehen, dass die Windenergieanlagen jeweils nur einen prozentualen Wert erhalten, der sich für jede Windenergieanlage auf beispielsweise ihre Nennleistung bezieht. Das Problem, dass eine falsche Einspeisung des Parks resultiert, wenn eine Windenergieanlage gar nicht in Betrieb ist, könnte dadurch allerdings nicht behoben werden.

Eine Lösungsmöglichkeit wäre, dass die tatsächlich eingespeiste Leistung am Netzanschlusspunkt mit dem vorgegebenen Leistungswert, der die Begrenzung angibt, verglichen wird. Stellt sich eine Differenz ein, so können die Begrenzungswerte, die an die einzelnen Windenergieanlagen übertragen wurden, entsprechend erhöht werden, bis die Differenz zwischen am Netzanschlusspunkt eingespeister Leistung und als Begrenzung vorgegebener Leistung zu null geworden ist. Das kann beispielsweise über einen Integralregler erreicht werden.

In dem Fall läge faktisch ein Integralregler vor, der somit auch die bekannten Nachteile aufweist, nämlich, dass ein schwingfähiges System entstehen kann. Bei Wahl einer entsprechend großen Integrationszeitkonstanten, also eines kleinen Verstärkungsfaktors, dürfte zwar eine stabile Regelung erreichbar sein, dafür wäre aber eine vergleichsweise langsame Regelung zu erwarten.

Besonders ist auch problematisch, zumindest ungünstig, dass eine pauschal gleichmäßige Aufteilung des Begrenzungswertes auf alle Windenergieanlagen, sei es nun als prozentualer Wert oder als absoluter Wert, eine von außen vorgegebene Leistungsbegrenzung auf einen bestimmten Wert prinzipbedingt auch zu jedes Mal gleichen Einzelvorgaben für die Windenergieanlagen kommt, unabhängig davon, ob die Windenergieanlagen in dem Moment gerade viel oder wenig Leistung erzeugen. Jede Windenergieanlage muss dann also ihren Betriebspunkt an die neue Vorgabe anpassen, wobei erst danach überprüft werden kann, ob dies am Netzanschlusspunkt auch tatsächlich zu der gewünschten Leistungsbegrenzung führt. Erst dann kann eine Abweichung festgestellt werden, die dann wiederum ausgeregelt werden kann. Dabei kann es regelmäßig vorkommen, dass jede Windenergieanlage zunächst ihren Betriebspunkt stark ändern muss, um dann nach dem Einsetzen der Regelung diesen erneut stark zu ändern.

Die US-amerikanische Offenlegungsschrift US 2017/0335824 A1 betrifft eine Parksteuerung, bei der Referenzwerte von einem Parkrechner für einzelne Windenergieanlagen verteilt werden.

Die europäische Offenlegungsschrift EP 2 876 768 A1 betrifft den Betrieb eines Windparks zur Netzstützung, wobei Netzzustände überwacht werden und auf sie entsprechend reagiert wird.

Der vorliegenden Erfindung liegt somit die Aufgabe zugrunde, eine Lösung vorzuschlagen, die zumindest eines der oben genannten Probleme adressiert. Insbesondere soll eine Lösung vorgeschlagen werden, bei der eine vorgegebene Leistungsbegrenzung an einem Netzanschlusspunkt eines Windparks oder zumindest einer Gruppe von Windenergieanlagen möglichst effizient auf die einzelnen Windenergieanlagen des Windparks bzw. der Windenergieanlagengruppe verteilt wird. Zumindest soll zu bisher bekannten Lösungen eine alternative Lösung vorgeschlagen werden.

Erfindungsgemäß wird somit ein Verfahren gemäß Anspruch 1 vorgeschlagen. Das Verfahren betrifft somit das Steuern einer Anlagengruppe, die mehrere Windenergieanlagen aufweist. Eine solche Anlagengruppe kann auch ein Windpark sein. Es kommt aber auch in Betracht, dass ein Windpark mehrere Anlagengruppen umfasst.

Jedenfalls erzeugt jede der Windenergieanlagen der Anlagengruppe elektrische Leistung als Anlagenleistung zum Einspeisen in ein elektrisches Versorgungsnetz. Mit Anlagenleistung wird somit diejenige Leistung bezeichnet, die jede Windenergieanlage jeweils erzeugt, und die von einer zur anderen Windenergieanlage natürlich unterschiedlich sein kann.

Die Anlagengruppe, die auch synonym als Windenergieanlagengruppe bezeichnet werden kann, speist eine Gruppenleistung an einem Netzanschlusspunkt in das elektrische Versorgungsnetz ein. Die Gruppenleistung wird im Wesentlichen aus einer Summe aller Anlagenleistungen der Anlagengruppe gebildet. Die Gruppenleistung muss allerdings nicht exakt der Summe aller Anlagenleistungen entsprechen, sondern es kommt auch in Betracht, dass noch Parkverluste abzuziehen sind. Solche Parkverluste können beispielsweise durch Übertragungsleitungen innerhalb des Windparks entstehen, über die die Anlagenleistung von der jeweiligen Windenergieanlage zum Netzanschlusspunkt übertragen wird. Die Parkverluste können grundsätzlich auch negativ sein.

Zum Begrenzen der Gruppenleistung wird eine Gruppenmaximalleistung vorgegeben. Wenn die Anlagengruppe einem Windpark entspricht, kann die Gruppenleistung der eingespeisten Leistung am Netzanschlusspunkt entsprechen und die Gruppenmaximalleistung entspricht dann der maximalen Leistung, die in dem Moment an dem Netzanschlusspunkt in das elektrische Versorgungsnetz eingespeist werden darf. Eine solche maximale Einspeiseleistung für den Netzanschlusspunkt kann besonders ein Netzbetreiber vorgeben. Sie kann aber auch von einer anderen Steuereinheit im elektrischen Versorgungsnetz vorgegeben werden, um ein weiteres Beispiel zu nennen.

Wenn die Anlagengruppe nicht einem Windpark entspricht, sondern ein Windpark mehrere Anlagengruppen aufweist, so kann die Gruppenmaximalleistung ein Teil einer maximalen einzuspeisenden Leistung am Netzanschlusspunkt sein, also einer maximalen Parkleistung. Beispielsweise kommt in Betracht, dass der bereits beispielhaft genannte Netzbetreiber eine maximal einzuspeisende Leistung am Netzanschlusspunkt vorgibt und diese gleichmäßig auf mehrere Anlagengruppen innerhalb des Windparks verteilt wird. Diese maximale Leistung am Netzanschlusspunkt kann beispielsweise zu je einem Drittel auf drei Anlagengruppen verteilt werden, wenn der Windpark nur diese drei Anlagengruppen aufweist und die auch etwa gleich leistungsstark sind.

Jedenfalls ist aber für eine Anlagengruppe die Gruppenmaximalleistung vorgesehen. Und zum Einhalten dieser Gruppenmaximalleistung wird ein Steuerwert an jede Windenergieanlage der Anlagengruppe übertragen, um die elektrische Leistung der jeweiligen Windenergieanlage, also die jeweilige Anlagenleistung, auf einen durch den Steuerwert definierten Maximalwert zu beschränken. Der jeweilige Maximalwert jeder Windenergieanlage wird somit durch den Steuerwert definiert. Besonders bevorzugt wird hierfür ein prozentualer Wert für den Steuerwert vorgegeben, der den Maximalwert in Bezug auf die Nennleistung der jeweiligen Windenergieanlage definieren kann.

Der Steuerwert ist dabei insbesondere ein einziger Wert, der für jede Windenergieanlage gleich ist. Ist der Steuerwert ein prozentualer Wert, bezogen auf die Nennleistung der jeweiligen Windenergieanlage, kann diesem Steuerwert somit bei Windenergieanlagen mit unterschiedlicher Nennleistung auch jeweils ein unterschiedlicher absoluter Leistungswert zugeordnet sein.

Zum Bestimmen des Steuerwertes wird vorgeschlagen, dass ein Steuerzusammenhang als Zusammenhang zwischen potentiellen Steuerwerten und potentiellen Gruppenleistungen ermittelt wird. Es wird somit ein Zusammenhang aufgestellt, der zu unterschiedlichen potentiellen Steuerwerten entsprechend unterschiedliche oder eventuell auch gleiche potentielle Gruppenleistungen ermittelt. Dafür kann beispielsweise eine Tabelle vorgesehen sein, die in einer Spalte verschiedene Steuerwerte aufweist und in einer anderen Spalte zugeordnete Gruppenleistungen. Diese Steuerwerte und die Gruppenleistungen, die den Steuerzusammenhang definieren, können als potentielle Steuerwerte bzw. potentielle Gruppenleistungen bezeichnet werden, um zu unterstreichen, dass sie zur Auswahl stehen aber noch nicht ausgewählt sind. Von dieser Betonung abgesehen ist der Zusatz "potentielle" entbehrlich, es gibt somit keinen Unterschied zwischen Steuerwerten und Gruppenleistungen einerseits und potentiellen Steuerwerten bzw. potentiellen Gruppenleistungen andererseits.

Weiter wird vorgeschlagen, dass der Steuerwert unter Verwendung des Steuerzusammenhangs und in Abhängigkeit von der vorgegebenen Gruppenmaximalleistung bestimmt wird. Im einfachsten Fall kann das bedeuten, dass ausgehend von der vorgegebenen Gruppenmaximalleistung eine potentielle Gruppenleistung derselben Größe, also mit demselben Wert, in dem Steuerzusammenhang, also beispielsweise in der genannten Tabelle, gesucht wird und dazu der zugeordnete potentielle Steuerwert als Steuerwert verwendet wird.

Beispielsweise könnte in einer Tabelle, wenn eine solche den Steuerzusammenhang wiedergibt, zu einem potentiellen Steuerwert von 40 % eine potentielle Gruppenleistung von 4 MW, bei einem potentiellen Steuerwert von 50 % eine potentielle Gruppenleistung von 5 MW und bei einem potentiellen Steuerwert von 60 % eine potentielle Gruppenleistung von 5,5 MW eingetragen sein. Das soll nur als vereinfachtes und veranschaulichendes Beispiel dienen, das sicherlich auch nur einen Ausschnitt eines Steuerzusammenhangs bildet.

Wird für dieses Beispiel nun eine Gruppenmaximalleistung von 5 MW vorgegeben, so findet sich bei einer potentiellen Gruppenleistung von 5 MW ein potentieller Steuerwert von 50 %. Es wird dann also 50 % als Steuerwert verwendet. Zum Einhalten der Gruppenmaximalleistung wird dann dieser Steuerwert von 50 % an jede Windenergieanlage der Anlagengruppe übertragen. Daraufhin stellt dann jede Windenergieanlage genau bzw. maximal 50 % jeweils ihrer Nennleistung zur Verfügung.

Weitere Details werden nachfolgend noch beschrieben. Zunächst ergibt sich hier aber bereits der Vorteil, dass der vorgegebenen Gruppenmaximalleistung, die in dem vereinfachten Beispiel 5 MW betrug, unmittelbar ein Steuerwert zugeordnet werden konnte. Dieser konnte an die Windenergieanlagen übermittelt werden und sie konnten sofort ihre Leistung darauf einstellen. Eine lang andauernde Regelungsprozedur, bei der die Werte der Anlagen, also die einzustellenden Anlagenleistungen der einzelnen Windenergieanlagen, erst so herangeführt werden müssen, dass sich die Gruppenleistung am Netzanschlusspunkt auf den Wert der vorgegebenen Gruppenmaximalleistung einstellt, kann hier entfallen.

Es versteht sich von selbst, dass der Steuerzusammenhang entsprechend so gewählt wird, dass die Steuerwerte tatsächlich auch zu den jeweiligen Gruppenleistungen gehören, die sich dann einstellen, wenn ein solcher Steuerwert wie beschrieben umgesetzt wird.

Gemäß einer Ausführungsform wird vorgeschlagen, dass der Steuerzusammenhang als Tabelle von Wertetupeln hinterlegt ist und jeder Wertetupel einen potentiellen Steuerwert und eine potentielle Gruppenleistung enthält. Der Steuerzusammenhang kann also als eine Reihe von Wertetupeln in einer Tabelle hinterlegt sein. Im einfachsten Fall enthält jeder Wertetupel nur einen potentiellen Steuerwert und eine potentielle Gruppenleistung, sodass jeder Wertetupel insoweit ein Wertepaar bildet. Somit kann auf einfache Art und Weise ein Steuerwert gefunden werden, indem in der Tabelle das Wertepaar bzw. der Wertetupel gesucht wird, bei dem die potentielle Gruppenleistung der vorgegebenen Gruppenmaximalleistung entspricht, oder ihr am nächsten ist. Der Steuerwert lässt sich dann einfach ablesen.

Es kommt aber auch in Betracht, dass weitere Elemente enthalten sind, wie beispielswiese eine laufende Nummer. In diesem Fall wären mit der laufenden Nummer als weiterem Wert drei Werte enthalten und somit läge ein Wertetupel vor.

Optional kann vorgesehen sein, dass der Steuerzusammenhang zusätzlich einen Grenzsteuerwert enthält. Ein solcher Grenzsteuerwert steht repräsentativ für den kleinsten Steuerwert, bei dem die zugeordnete Gruppenleistung ihren aktuellen Maximalwert erreicht hat. Vorzugsweise kann sich der Grenzsteuerwert aus dem Wert dieses kleinsten Steuerwertes zuzüglich eines Reservewertes zusammensetzen.

Der Steuerwert ist zum Steuern jeder einzelnen Windenergieanlage vorgesehen, um dadurch einen Maximalwert, nämlich am Netzanschlusspunkt die Gruppenmaximalleistung einzuhalten. Der Steuerwert wird insoweit auch im Wesentlichen die Funktion einer Obergrenze haben. Auch die Windgeschwindigkeit begrenzt die maximal erzeugbare Leistung und dadurch ergeben sich besonders bei Windgeschwindigkeiten unterhalb Nennwindgeschwindigkeit potentielle Steuerwerte mit potentiellen Gruppenleistungen, bei denen die potentielle Gruppenleistung auch bei höherem potentiellen Steuerwert aufgrund der niedrigen Windgeschwindigkeit nicht mehr erhöht werden kann. Mit einer Erhöhung des Steuerwertes kann dann also keine Erhöhung der Gruppenleistung mehr erreicht werden. Dazu wird vorgeschlagen, dass der erste oder kleinste Steuerwert, für den die potentielle Gruppenleistung aktuell an der überhaupt erzeugbaren Leistungsgrenze aufgrund des vorherrschenden Windes ist, als Grenzsteuerwert zusätzlich gekennzeichnet bzw. abgespeichert wird.

Wird also abhängig von einer vorgegebenen Gruppenmaximalleistung über eine potentielle Gruppenleistung der Tabelle ein zugeordneter potentieller Steuerwert gefunden, kann zu diesem geprüft werden, ob er über dem Grenzsteuerwert liegt. Ist das der Fall, kann der Grenzsteuerwert als aktueller Steuerwert verwendet werden, denn mit dem gefundenen größeren potentiellen Steuerwert kann aufgrund der vorherrschenden Windgeschwindigkeit in dem Fall nicht mehr Leistung erzeugt werden.

Vorzugsweise kann vorgesehen sein, dass der Grenzsteuerwert dem kleinsten Steuerwert, bei dem sich die Gruppenleistung nicht mehr erhöht, zuzüglich eines Reservewertes entspricht. Wird beispielsweise ein Steuerwert als prozentualer Wert verwendet, der grundsätzlich von 0 - 100 % reichen kann, so kann der Reservewert 5 % aufweisen oder im Bereich von 5 % liegen, wie beispielsweise im Bereich von 2 - 10 %. Durch diesen Reservewert können Schwankungen des vorherrschenden Windes mitberücksichtigt werden. Es wird also verhindert, dass durch Verwendung des Grenzsteuerwertes eine unnötige Begrenzung der Anlagenleistung erreicht wird, weil sich die Windgeschwindigkeit seit Ermittlung des Grenzsteuerwertes geringfügig erhöht hat oder beispielsweise andere Ungenauigkeiten zu einer unerwünschten Begrenzung führen könnten.

Der Grenzsteuerwert wird vorzugsweise zusammen mit dem Steuerzusammenhang, der als Tabelle von Wertetupeln hinterlegt ist, abgespeichert, also zusätzlich hinterlegt. Grundsätzlich kommt aber auch in Betracht, dass der Grenzsteuerwert zusätzlich in dem Steuerzusammenhang enthalten ist, ohne dass der Steuerzusammenhang als Tabelle realisiert wird. Der Steuerzusammenhang könnte beispielsweise auch über einen funktionalen Zusammenhang zwischen Steuerwert und Gruppenleistung berücksichtigt werden. Nicht lineare Zusammenhänge zwischen potentiellen Steuerwerten und potentiellen Gruppenleistungen könnten beispielsweise durch stückweise zusammengesetzte Funktionen berücksichtigt werden.

Vorzugsweise ist der Steuerwert als relativer Wert angegeben, besonders als prozentualer Wert, besonders bezogen auf eine Nennleistung. Aus dem Steuerzusammenhang, also beispielsweise aus der genannten Tabelle, ist somit der Steuerwert entnehmbar und gibt einen prozentualen Wert bezogen auf eine Nennleistung. Der so ermittelte prozentuale Wert kann dadurch unmittelbar an die einzelnen Windenergieanlagen der Anlagengruppe übermittelt werden und dort dann als prozentualer Wert bezogen auf die jeweilige Nennleistung der jeweiligen einzelnen Anlage interpretiert werden.

Gemäß einer Ausführungsform wird vorgeschlagen, dass zum Erstellen des Steuerzusammenhangs sukzessive für mehrere potentielle Steuerwerte von einem vorgebbaren ersten potentiellen Steuerwert bis zu einem vorgebbaren letzten potentiellen Steuerwert zu jedem potentiellen Steuerwert eine potentielle Gruppenleistung ermittelt wird. Insbesondere können die potentiellen Steuerwerte von 1 % bis 100 % in 1 %-Schritten hochgezählt werden und dabei zu jedem potentiellen Steuerwert, also in dem Beispiel zu jedem Prozentwert, eine potentielle Gruppenleistung ermittelt werden. Das Ergebnis kann beispielsweise in eine entsprechende Tabelle mit entsprechenden Wertepaaren oder Wertetupeln eingetragen werden. Die Steuerwerte können auch in einer anderen Reihenfolge abgearbeitet werden.

Die potentielle Gruppenleistung wird für den jeweiligen potentiellen Steuerwert als Summe theoretisch erzeugbarer Leistung jeder der Windenergieanlagen der Anlagengruppe berechnet. Die theoretisch erzeugbare Leistung der Windenergieanlage wird in Abhängigkeit von einer nominell begrenzten Leistung und in Abhängigkeit von einer verfügbaren Leistung bestimmt.

Die nominell begrenzte Leistung berechnet sich aus einer Nennleistung der Windenergieanlage und dem potentiellen Steuerwert. Insbesondere berechnet sich die nominell begrenzte Leistung als Produkt aus der Nennleistung der betreffenden Windenergieanlage und dem potentiellen Steuerwert, wenn der Steuerwert als prozentualer Wert ausgebildet ist.

Die verfügbare Leistung bezeichnet eine aktuell von der Windenergieanlage erzeugbare elektrische Leistung. Wenn die Windenergieanlage nicht abgeregelt ist, entspricht das im Wesentlichen der in dem Moment tatsächlich erzeugten Leistung. Entsprechend kann dann auch die tatsächlich erzeugte Leistung als verfügbare Leistung für diese Bestimmung der theoretisch erzeugbaren Leistung verwendet werden.

Ist die Windenergieanlage aber abgeregelt, weil sie beispielsweise aufgrund einer Schallschutzvorschrift mit geringerer Drehzahl und/oder mit geringerer Leistung betrieben werden muss, so ist die verfügbare Leistung diejenige Leistung, die die Windenergieanlage erzeugen könnte, wenn sie diese Abregelung nicht einhalten müsste. Dafür kann die Windenergieanlage beispielsweise die Windgeschwindigkeit erfassen und davon abhängig kann die verfügbare Leistung berechnet werden.

Aus der nominell begrenzten Leistung und der verfügbaren Leistung wird dann die theoretisch erzeugbare Leistung bestimmt und das erfolgt insbesondere so, dass von beiden Leistungen der kleinere Wert verwendet wird. Die theoretisch erzeugbare Leistung ist also von der nominell begrenzten Leistung und der verfügbaren Leistung der kleinere Wert.

Auf diese Art und Weise wird die theoretisch erzeugbare Leistung für jede Windenergieanlage der Anlagengruppe berechnet und das Ergebnis wird zusammenaddiert und bildet die potentielle Gruppenleistung für den betreffenden potentiellen Steuerwert.

Auf die gleiche Art und Weise wird die potentielle Gruppenleistung für viele weitere Steuerwerte bestimmt. Insbesondere kann dies für jeden Steuerwert von 1 % bis 100 % durchgeführt werden, vorzugsweise in 1 %-Schritten. Das Ergebnis ist der Steuerzusammenhang und insoweit kann das Ergebnis besonders eine entsprechend gefüllte Tabelle sein.

Vorzugsweise wird der Steuerzusammenhang innerhalb vorgebbarer Zeitabstände aktualisiert, insbesondere innerhalb von Zeitabständen, die kleiner als 1 Minute gewählt werden. Der Steuerzusammenhang wird also alle Minute oder öfter aktualisiert.

Hier liegt besonders der Gedanke zugrunde, dass die Windgeschwindigkeit schwanken kann und sich somit der Steuerzusammenhang auch ändern kann. Der Steuerzusammenhang kann innerhalb weniger Sekunden erstellt werden und dadurch ist es möglich, dass immer ein aktueller Steuerzusammenhang, nämlich passend zum vorherrschenden Wind, vorhanden ist.

Zum Einhalten der Gruppenmaximalleistung wird somit ein Steuerwert abhängig von einem wie vorstehend beschriebenen Steuerzusammenhang bestimmt. Für die in dem Moment vorherrschende Windgeschwindigkeit bildet dieser Steuerzusammenhang und damit der daraus ermittelte Steuerwert einen festen Wert. Das Anpassen der Windenergieanlagen basierend auf diesem Steuerwert kann insoweit auch als Steuerung angesehen werden, bei der nämlich keine Rückführung erfolgt und stattdessen ein fester Steuerwert verwendet wird.

Die Aktualisierung des Steuerzusammenhangs wird vorzugsweise auch dann fortgesetzt, wenn die Anlagengruppe ihre Gruppenleistung auf eine vorgegebene Gruppenmaximalleistung begrenzt. Auch in diesem Fall berechnet sich vorzugsweise die verfügbare Leistung als diejenige Leistung, die die jeweilige Windenergieanlage erzeugen könnte, wenn diese Beschränkung auf die Gruppenmaximalleistung nicht vorläge.

Somit wird auch in diesem Fall der Steuerzusammenhang regelmäßig aktualisiert und es können sich dann entsprechend auch neue Steuerwerte ergeben, die dann entsprechend auch umgesetzt werden, also an die Windenergieanlagen übertragen werden können.

Gemäß einer Ausführungsform wird vorgeschlagen, dass ein Referenzzusammenhang ermittelt wird. Ein solcher Referenzzusammenhang kann auch als zweite Tabelle erstellt oder bezeichnet werden, die eine schnellere Zuordnung der Gruppenmaximalleistung zu einer potentiellen Gruppenleistung des Steuerzusammenhangs ermöglicht, insbesondere, wenn der Steuerzusammenhang als Tabelle hinterlegt ist.

Als Referenzzusammenhang wird somit aus dem Steuerzusammenhang ein Zusammenhang zwischen potentiellen Gruppenleistungen und potentiellen Steuerwerten ermittelt, um mittels des Referenzzusammenhangs aus einer vorgegebenen Gruppenmaximalleistung einen Steuerwert zu erhalten. Besonders ist vorgesehen, dass der Zusammenhang nur für einige der potentiellen Steuerwerte bestimmt wird, indem von den potentiellen Steuerwerten des Steuerzusammenhangs nur jeder n-te potentielle Steuerwert verwendet wird, wobei n eine ganze Zahl von 2 - 100 ist. Dadurch kann erreicht werden, in einem ersten Zuordnungsschritt einen schnellen ersten Zusammenhang zwischen einer vorgegebenen Gruppenleistung und einem in erster Näherung zugeordneten potentiellen Steuerwert zu finden. In einem zweiten Zuordnungsschritt kann dann basierend auf dem in erster Näherung zugeordneten potentiellen Steuerwert und dem Steuerzusammenhang ein genauer zugeordneter potentieller Steuerwert bestimmt und verwendet werden.

Beispielsweise kann der Steuerzusammenhang Steuerwerte von 1 % bis 100 % in 1 %-Schritten aufweisen. Von diesem Steuerzusammenhang kann für den Referenzzusammenhang beispielsweise jeder zehnte Wert des Steuerzusammenhangs, also beispielsweise 10 %, 20 %, 30 % usw. in den Referenzzusammenhang übernommen werden, einschließlich der jeweils zugeordneten potentiellen Gruppenleistung. Der Referenzzusammenhang kann somit auch eine Tabelle enthalten, die in dem genannten Beispiel aber nur zehn Einträge enthält.

Um nun abhängig von einer vorgegebenen Gruppenmaximalleistung einen Steuerwert zu finden, kann beispielsweise ausgehend von einer Gruppenmaximalleistung eine zugeordnete potentielle Gruppenleistung in dem Referenzzusammenhang gewählt werden, die nämlich dem Wert der vorgegebenen Gruppenmaximalleistung am nächsten kommt. Beispielsweise könnte bei einer vorgegebenen Gruppenmaximalleistung von 10 MW in dem Referenzzusammenhang ein Wert einer potentiellen Gruppenleistung von 8 MW gefunden werden, dem ein potentieller Steuerwert von 40 % zugeordnet sein könnte. Dieses Wertepaar, das einen Steuerwert in Höhe von 40 % mit zugeordneter potentieller Gruppenleistung von 8 MW aufweist, hat dann auch ein Pendant in dem Steuerzusammenhang.

Dadurch kann unmittelbar und schnell dieser Wert von 40 % bei 8 MW in dem Steuerzusammenhang gefunden werden. Dieser Wert der potentiellen Gruppenleistung von 8 MW ist entsprechend schon sehr nah dran an der vorgegebenen Gruppenmaximalleistung von 10 MW.

Darauf basierend kann nun in dem Steuerzusammenhang eine verfeinerte Suche durchgeführt werden, indem von der potentiellen Gruppenleistung von 8 MW nach höheren Werten gesucht wird, bis dazu in dem Steuerzusammenhang der Steuerwert von 10 MW als potentielle Gruppenleistung gefunden wird. Dem könnte ein Steuerwert von 45 % zugeordnet sein, und dieser Steuerwert wurde somit schnell gefunden. Mit dem Referenzzusammenhang wurde also eine erste schnelle, aber nicht genaue Suche durchgeführt. Davon ausgehend wurde dann in dem Steuerzusammenhang eine verfeinerte Suche durchgeführt.

Vorzugsweise wird in dem zweiten Zuordnungsschritt, also der verfeinerten Zuordnung in dem Steuerzusammenhang, eine Interpolation zwischen zwei potentiellen Steuerwerten des Steuerzusammenhangs durchgeführt. Am obigen Beispiel könnte das bedeuten, dass auch der Steuerzusammenhang den Wert von 10 MW gar nicht exakt als Wert der potentiellen Gruppenleistung aufweist, sondern beispielsweise nur einen Wert von 9,8 MW und als Nächstes einen Wert von 10,2 MW. Ist diesen beispielhaft genannten Werten dann ein Steuerwert von 44 % bzw. 45 % zugeordnet, kann durch Interpolation, beispielsweise durch lineare Interpolation, für 10 MW ein Wert von 44,5 % gefunden werden.

Gemäß einer Ausführungsform wird vorgeschlagen, dass die Bestimmung des Steuerzusammenhangs in einem zentralen Gruppenrechner für die gesamte Anlagengruppe durchgeführt wird, der Gruppenrechner dazu benötigte Werte einschließlich Betriebswerten regelmäßig von den Windenergieanlagen der Anlagengruppe erhält, der Gruppenrechner den Steuerwert bestimmt und an alle Windenergieanlagen der Anlagengruppe überträgt. Wenn die Anlagengruppe einen Windpark bildet oder Teil eines Windparks ist, kann der zentrale Gruppenrechner als Teil einer zentralen Parksteuerung ausgebildet sein. Zum Bestimmen des Steuerzusammenhangs sind Informationen über jede einzelne Windenergieanlage und ihren Betrieb erforderlich, und die können auch in dem Gruppenrechner zusammengeführt werden.

Je nach Art des zu erstellenden Steuerzusammenhangs wird von jeder Windenergieanlage ihre Nennleistung, ihr Status und der in ihrem Bereich vorherrschende Wind benötigt, oder davon abgeleitete Werte. Zum Status der Windenergieanlage gehört besonders, ob sie überhaupt verfügbar ist oder beispielsweise aufgrund von Wartungsarbeiten temporär nicht verfügbar ist. Statt oder zusätzlich zu Informationen über die Windgeschwindigkeit kann die Windenergieanlage selbst ihre verfügbare Leistung bestimmen und an den Gruppenrechner übertragen. Die verfügbare Leistung kann beispielsweise direkt aus gemessenem Wind bestimmt werden. Vorzugsweise wird sie aber aus Betriebswerten und dem Status der Windenergieanlage bestimmt. Besonders kann aus einer aktuellen Drehzahl der Windenergieanlage und ihrer aktuell erzeugten Leistung sowie einer Blattstellung bzw. dem Blattwinkel ihrer Rotorblätter die verfügbare Leistung bestimmt werden. Das kann an der Windenergieanlage erfolgen, sodass die Windenergieanlage dann ihre verfügbare Leistung an den zentralen Gruppenrechner überträgt, oder die genannten zur Berechnung notwendigen Werte werden von der Windenergieanlage an den zentralen Gruppenrechner übertragen, sodass der zentrale Gruppenrechner die verfügbare Leistung selbst berechnen kann.

Außerdem wird vorgeschlagen, dass in jedem Fall die Windenergieanlage ihre aktuell erzeugte Leistung an den zentralen Gruppenrechner überträgt. Die aktuell erzeugte Leistung kann als Betriebswert verstanden werden, ebenso wie die aktuelle Drehzahl und/oder ein aktueller Blattwinkel.

Zur Bestimmung einer nominell begrenzten Leistung wird auch die Nennleistung der jeweiligen Windenergieanlage benötigt. Die Nennleistung jeder Windenergieanlage kann in dem zentralen Gruppenrechner hinterlegt sein. Vorzugsweise wird aber auch die Nennleistung jeder einzelnen Windenergieanlage an den zentralen Gruppenrechner übertragen. Dadurch kann verhindert werden, dass eine fehlerhafte Hinterlegung der jeweiligen Nennleistung beim zentralen Gruppenrechner vorliegt.

Vorzugsweise setzt sich der Steuerwert aus einem festen Steueranteil und einem variablen Steueranteil zusammen, wobei der feste Steueranteil unter Verwendung des Steuerzusammenhangs und in Abhängigkeit von der vorgegebenen Gruppenmaximalleistung bestimmt wird, und der variable Steueranteil in Abhängigkeit von einem Soll-/Istwert-Vergleich zwischen der vorgegebenen Gruppenmaximalleistung und der am Netzanschlusspunkt eingespeisten Gruppenleistung bestimmt wird. Der feste Steueranteil wird somit so bestimmt, wie dies vorstehend mittels des Steuerzusammenhangs erläutert wurde. Der feste Steueranteil kann somit auch als der Anteil verstanden werden, der als Steuerung eingesetzt wird bzw. zur Steuerung eingesetzt wird, nämlich ohne Regelungsrückführung.

Der variable Steueranteil hängt hingegen von einem Soll-/Istwert-Vergleich ab und kann somit auch als Anteil einer Regelung verstanden werden.

Besonders wird hier vorgeschlagen, dass der variable Steueranteil maximal auf ein Zehntel eines Maximalwertes des Steuerwertes begrenzt ist. Wird als Steuerwert ein prozentualer Wert angegeben und reicht daher von 0% bis 100%, so ist der variable Steueranteil absolut auf maximal 10% beschränkt, vorzugsweise auf maximal 5%. Dadurch kann erreicht werden, dass das Einstellen bzw. Umsetzen der vorgegebenen Gruppenmaximalleistung im Wesentlichen durch den festen Steueranteil vorgenommen werden kann und damit dieses Umsetzen im Wesentlichen im Wege einer Steuerung durchgeführt werden kann. Der variable Steueranteil und damit der Regelungsanteil sollen möglichst nur geringfügige Nachjustierungen erreichen. Dieser Vorschlag hat den Vorteil, dass durch die überwiegende Umsetzung mittels einer Steuerung eine schnelle und dabei nicht schwingende Umsetzung der vorgegebenen Gruppenmaximalleistung durchgeführt werden kann. Der variable Anteil kann insoweit besonders zum Erreichen einer stationären Genauigkeit eingesetzt werden.

Vorzugsweise wird der Soll-/Istwert-Vergleich zwischen der vorgegebenen Gruppenmaximalleistung und der am Netzanschlusspunkt eingespeisten Gruppenleistung als Regelfehler berücksichtigt, nämlich insbesondere im regelungstechnischen Sinne. Insbesondere wird vorgeschlagen, dass der Regelfehler als normierter Wert verwendet wird.

Weiterhin wird vorgeschlagen, dass der variable Steueranteil einen Integralanteil des Regelfehlers aufweist, wobei der Integralanteil aus dem Regelfehler über eine Integration bzw. einen Integrator mit einem Integrationsfaktor bestimmt wird. Insoweit bildet der variable Steueranteil oder zumindest ein Teil des integralen Steueranteils einen I-Regler. Über die Wahl des Integrationsfaktors kann die Integrationszeitkonstante und damit die Schnelligkeit dieses integrierenden Reglers, also des I-Reglers, beeinflusst bzw. eingestellt werden.

Insbesondere wird vorgeschlagen, dass der Integrationsfaktor von der Amplitude des Regelfehlers abhängt. Vorzugsweise wird vorgeschlagen, dass der Integrationsfaktor umso größer gewählt wird, je größer der Betrag des Regelfehlers ist. Dadurch können vergleichsweise große Abweichungen schnell ausgeregelt werden. Sind die Abweichungen aber klein, so wird keine schnelle Ausregelung mehr benötigt, denn die vorgegebene Gruppenmaximalleistung ist im Wesentlichen erreicht. Es können dann aber Rauschanteile dominant werden und den Regler anregen und Veränderungen des Steuerwertes auslösen, obwohl keine Änderung vorliegt. Durch eine Verringerung des Integrationsfaktors bei geringen Werten des Regelfehlers kann dieses Problem gelöst werden, zumindest verringert werden.

Gemäß einer weiteren Ausgestaltung ist vorgesehen, dass der Integralanteil auf einen Bruchteil eines Maximalwertes des Steuerwertes begrenzt wird, wobei der Bruchteil vorzugsweise im Bereich von 5 - 20 % des Maximalwertes des Steuerwertes liegt. Insbesondere beträgt er 10 % des Maximalwertes des Steuerwertes. Wird der Steuerwert als prozentualer Wert vorgegeben, beträgt der Maximalwert des Steuerwertes 100%. Durch diese Begrenzung kann erreicht werden, dass der Integralanteil in keinem Fall zu groß wird, dass also keine zu starke Aufintegration erfolgt. Dadurch kann verhindert werden, dass der Integralanteil zu dominant wird und es wird erreicht, dass die grundsätzliche Eigenschaft des festen Steueranteils, nämlich, wie eine Steuerung ohne Rückführung zu wirken, erhalten bleibt.

Außerdem oder alternativ wird vorgeschlagen, dass der variable Steueranteil nach einer Änderung der vorgegebenen Gruppenmaximalleistung, insbesondere nach einerÄnderung um einen Wert größer als eine vorgegebene Änderungsgrenze, zeitverzögert bestimmt wird und/oder zeitverzögert aufgeschaltet wird. Zumindest ist vorgesehen, dass eine vollständige Bestimmung oder vollständige Aufschaltung erst zeitverzögert erfolgt. Eine solche Zeitverzögerung kann im Bereich von 1 - 20 Sekunden liegen, insbesondere im Bereich von 2 - 10 Sekunden.

Hierdurch wird erreicht, dass nach einer Änderung der vorgegebenen Gruppenmaximalleistung, die sich regelungstechnisch meist als Eingangssprung darstellen dürfte, jedenfalls dann, wenn die vorgegebene Gruppenmaximalleistung nicht kontinuierlich verändert wird, eine Dominanz des Integralanteils und/oder ein zu starkes Aufintegrieren vermieden wird. Durch einen solchen Eingangssprung ergibt sich nämlich ein entsprechend großer Regelfehler, der wiederum in dem Integralregler zu einem schnell ansteigenden Integralanteil führen würde. Durch die vorgeschlagene Zeitverzögerung ist somit der Integralanteil zunächst inaktiv. In dieser Zeit kann nach der Änderung der vorgegebenen Gruppenmaximalleistung der feste Anteil des Steuerwertes aus dem Steuerzusammenhang ermittelt werden und eingestellt werden. Nach der Zeitverzögerung erhält dann der variable Steueranteil, insbesondere der Integralanteil bzw. Integralregler, nur noch einen geringen Regelfehler, weil durch den festen Steueranteil die Gruppenleistung schon etwa den Wert der vorgegebenen Gruppenmaximalleistung aufweist.

Somit kann auch durch dieses vorgeschlagene zeitverzögerte Bestimmen und/oder Aufschalten des variablen Steueranteils eine zu starke Dominanz des Integralanteils vermieden werden. Vorzugsweise wird diese Zeitverzögerung nur aktiviert, wenn die Änderung um einen Wert erfolgt, die größer als eine vorgegebene Änderungsgrenze ist. Dadurch können kleine Sprünge vernachlässigt werden. Es wird auch vermieden, dass bei Messrauschen versehentlich diese Funktion ausgelöst wird. Vorzugsweise wird die vorgegebene Änderungsgrenze im Bereich von 3 bis 15%, insbesondere 5 bis 10% gewählt, bezogen auf die installierte Anlagenleistung der Anlagengruppe, bzw. der Gruppennennleistung.

Vorzugsweise wird der variable Steueranteil mit Hilfe eines Integrators bestimmt, und bei einer Veränderung, insbesondere sprunghaften Veränderung der vorgegebenen Gruppenmaximalleistung, wird ein Ausgangswert des Integrators zurückgesetzt. Dadurch wird verhindert, dass ein alter aufintegrierter Wert, der nämlich den Ausgang des Integrators bildet, zunächst den variablen Steueranteil bildet bzw. diesen dominiert. Hier wird besonders ausgenutzt, dass die vorgegebene Gruppenmaximalleistung keinen physikalischen Eingangswert bildet, sondern als Vorgabewert übertragen wird oder anderweitig als in eine Auswertelogik auswertbare Information vorliegt, die einen gezielten Eingriff auf den Integrator ermöglicht. Dadurch kann gezielt nach einer Veränderung, insbesondere sprunghaften Veränderung der vorgegebenen Gruppenmaximalleistung der Integrator angepasst werden. Ein Eingangssprung kann aber auch anderweitig erfasst und erkannt werden.

Erfindungsgemäß wird auch eine Anlagengruppe vorgeschlagen. Eine solche Anlagengruppe weist mehrere Windenergieanlagen auf. Außerdem ist ein Prozessrechner mit einer Gruppensteuerung vorgesehen, zum Steuern der Anlagengruppe. Die Gruppensteuerung ist dabei dazu vorbereitet, die Anlagengruppe, insbesondere das Einspeisen der Anlagengruppe in ein elektrisches Versorgungsnetz, so zu steuern, wie vorstehend gemäß wenigstens einer Ausführungsform des Verfahrens zum Steuern einer Anlagengruppe erläutert wurde.

Erfindungsgemäß wird auch ein Verfahren zum Steuern eines mehrere Anlagengruppen aufweisenden Windparks vorgeschlagen, wobei zum Steuern jeder Anlagengruppe ein Verfahren gemäß einer der vorstehend beschriebenen Ausführungsformen verwendet wird. Gemäß diesem Verfahren wird zum Begrenzen einer an dem Netzanschlusspunkt eingespeisten Parkleistung eine Parkmaximalleistung vorgegeben. Diese Parkmaximalleistung wird nach einer Verteilvorschrift in mehrere Teilmaximalleistungen aufgeteilt und jede der Anlagengruppen bekommt eine der mehreren Teilmaximalleistungen als Gruppenmaximalleistung. Mit anderen Worten wird die Parkmaximalleistung nach einer Verteilvorschrift in mehrere Gruppenmaximalleistungen aufgeteilt. Jede der Anlagengruppen wird dann abhängig von ihrer Gruppenmaximalleistung gemäß einem Verfahren gesteuert, wie vorsehend gemäß wenigstens einer Ausführungsform zum Verfahren zum Steuern einer Anlagengruppe erläutert wurde.

Hier wird besonders vorgeschlagen, dass ein Windpark, der gemäß einer vorgegebenen Parkmaximalleistung begrenzt wird, diese Grenze nicht an alle Windenergieanlagen des Windparks einzeln verteilt, sondern diese Parkmaximalleistung in mehrere Gruppenmaximalleistungen aufteilt, die besonders auch unterschiedlich sind. Jede Anlagengruppe kann dann ihre Gruppenleistung wie vorstehend erläutert abhängig von ihrer individell erhaltenen Gruppenmaximalleistung steuern.

Besonders wird vorgeschlagen, dass die Verteilvorschrift die Parkmaximalleistung in Abhängigkeit von einer Gruppenleistung jeder Anlagengruppe, in Abhängigkeit von einem Status jeder Anlagengruppe und/oder in Abhängigkeit von einem Betriebszustand jeder Anlagengruppe in Teilmaximalleistungen aufteilt.

Hier liegt besonders die Erkenntnis zugrunde, dass im Fall einer Leistungsbegrenzung es nicht unbedingt sinnvoll ist, alle Windenergieanlagen des Parks gleich zu begrenzen bzw. allen Windenergieanlagen des Parks gleiche Grenzwerte vorzugeben. Es können hier unterschiedliche Situationen und/oder Interessen und/oder Vorschriften berücksichtigt werden, ohne dass dafür eine zentrale Parksteuerung jeder einzelnen Windenergieanlage einen einzelnen Steuerwert vorzugeben braucht. Hier kann die vorbeschriebene Steuerung der Anlagengruppen eingesetzt werden, wodurch eine schnelle Umsetzung der jeweils vorgegebenen Gruppenmaximalleistung möglich ist, und dadurch auch eine schnelle Umsetzung der vorgegebenen Parkmaximalleistung.

Vorzugsweise hängt die Verteilvorschrift, die die Parkmaximalleistung in Teilmaximalleistungen aufteilt, von einer Gruppennennleistung jeder Anlagengruppe ab. Die Gruppennennleistung ist insbesondere die Summe aller Nennleistungen der Windenergieanlagen der Anlagengruppe. Dadurch kann eine einfache Verteilvorschrift geschaffen werden.

Alternativ, insbesondere aber zusätzlich wird vorgeschlagen, dass die Verteilvorschrift die Parkmaximalleistung in Abhängigkeit von einem Status jeder Anlagengruppe in Teilmaximalleistungen aufteilt. Das beinhaltet auch die Berücksichtigung eines Status jeweils einzelner Windenergieanlagen der betreffenden Anlagengruppe. Hier kann besonders berücksichtigt werden, dass beispielsweise eine Windenergieanlage der Anlagengruppe aufgrund von Wartungsarbeiten nicht in Betrieb ist, oder aufgrund anderer Vorschriften bereits reduziert betrieben werden muss. Das kann zwar bei der Umsetzung der Gruppenmaximalleistung in die jeweiligen Steuerwerte berücksichtigt werden, hier wird aber vorgeschlagen, es bereits bei der Verteilung der Parkmaximalleistung zu berücksichtigen. Besonders dann, wenn nämlich eine Windenergieanlage gerade nicht betriebsbereit ist, kann auch die betreffende Anlagengruppe insgesamt nur weniger einspeisen, und daher wird vorgeschlagen, dies bereits bei der Verteilung der Parkmaximalleistung auf die einzelnen Gruppenmaximalleistungen zu berücksichtigen.

Außerdem oder alternativ wird vorgeschlagen, dass die Verteilvorschrift die Parkmaximalleistung in Abhängigkeit von einem Betriebszustand jeder Anlagengruppe in Teilmaximalleistungen aufteilt. Ein Betriebszustand kann beispielsweise eine bewusste Reduzierung der Windenergieanlage sein. Auch ihre erzeugte Anlagenleistung ist ein Betriebszustand, und damit ist die insgesamt erzeugte Leistung aller Windenergieanlagen der Anlagengruppe ein Betriebszustand jeder Anlagengruppe. Über die Berücksichtigung des Betriebszustandes jeder Anlagengruppe kann somit auch ein einzelner Betriebszustand einer Windenergieanlage der Anlagengruppe berücksichtigt werden.

Hier liegt besonders die Erkenntnis zugrunde, dass ein Windpark mehrere Anlagengruppen aufweisen kann, die zwar zusammen an demselben Netzanschlusspunkt in das elektrische Versorgungsnetz einspeisen, aber von unterschiedlichen Betreibern betrieben werden und/oder unterschiedliche Anlagentypen aufweisen und/oder von unterschiedlichen Windenergieanlagenherstellern stammen.

Beabsichtigt beispielsweise der Betreiber einer der Anlagengruppen, seine Windenergieanlagen besonders für eine Netzstützung bereitzustellen und daher nicht maximale Leistung einzuspeisen, während ein anderer Betreiber einer anderen Anlagengruppe desselben Windparks stattdessen möglichst viel Leistung einspeisen möchte, so kann dies bei der Verteilvorschrift zum Aufteilen der Parkmaximalleistung in die Teilmaximalleistungen berücksichtigt werden. Im genannten Beispiel kann vorgesehen sein, die Parkmaximalleistung, die insoweit eine Begrenzung darstellt, im Wesentlichen an die Anlagengruppe des Betreibers weiterzugeben, der im Wesentlichen Stützleistung zur Verfügung stellen möchte und gar nicht maximale Leistung einspeisen möchte. Davon kann der andere Betreiber profitieren, der maximale Leistung einspeisen möchte. Er kann dann im Falle einer Reduzierung der Parkleistung durch die Vorgabe der Parkmaximalleistung bei einer solchen ungleichen Verteilung dieser Parkmaximalleistung mehr Leistung einspeisen. Er kann davon profitieren, dass der andere Betreiber nicht maximale Leistung einspeisen möchte.

Es kommen aber auch andere Möglichkeiten in Betracht, wie beispielsweise, dass eine Anlagengruppe in der Nähe einer Besiedlung steht und dort aus Lärmschutzgründen gedrosselt betrieben wird. Auch in diesem Fall kann es sinnvoll sein, die Parkmaximalleistung so aufzuteilen, dass die Windenergieanlagen, die ohnehin gedrosselt betrieben werden müssen, auch eine größere Begrenzung als Begrenzungswert erhalten, weil sie dadurch trotzdem kaum oder vielleicht gar nicht weiter in ihrer Leistungserzeugung reduziert werden müssen. Hier kann wieder die Anlagengruppe profitieren, die in dem Moment ungedrosselt einspeisen könnte. Solche Vorschriften zur Geräuschbegrenzung können beispielsweise auch von der Windrichtung abhängen und davon abhängig kann es sein, dass bei einer anderen Windrichtung eine andere Anlagengruppe reduziert zu betreiben wäre. Das könnte dann wieder in der Verteilvorschrift berücksichtigt werden.

Erfindungsgemäß wird auch ein Windpark mit mehreren Anlagengruppen vorgeschlagen, nämlich solchen Anlagengruppen, wie vorstehend gemäß wenigstens einer Ausführungsform dazu erläutert wurde.

Ein solcher Windpark umfasst mehrere Anlagengruppen und den Netzanschlusspunkt, an dem alle Windenergieanlagen des Windparks und damit alle Anlagengruppen in das elektrische Versorgungsnetz einspeisen. Zusätzlich ist ein zentraler Parkrechner vorgesehen, der auch synonym als zentrale Parksteuerung bezeichnet werden kann, und der dazu vorbereitet ist, wenigstens ein Verfahren zum Steuern eines Windparks durchzuführen, nämlich ein Verfahren gemäß wenigstens einer Ausführungsform, die ein Verfahren zum Steuern eines Windparks vorstehend erläutert.

Die Erfindung wird nun nachfolgend exemplarisch anhand von Ausführungsbeispielen unter Bezugnahme auf die begleitenden Figuren näher erläutert.

Figur 1    zeigt eine Windenergieanlage in einer perspektivischen Darstellung.

Figur 2    zeigt einen Windpark in einer schematischen Darstellung.

Figur 3    zeigt einen Windpark mit drei Anlagengruppen in einer schematischen Darstellung.

Figur 4    zeigt ein Diagramm zur Veranschaulichung des Erstellens eines Steuerzusammenhangs.

Figur 5    zeigt veranschaulichend eine Regelungsstruktur zum Steuern einer Anlagengruppe.

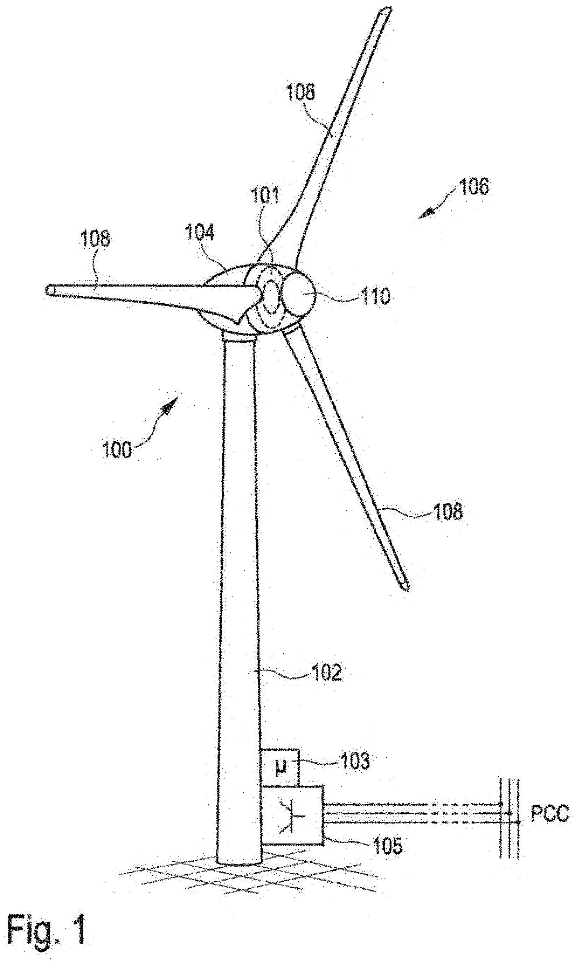

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

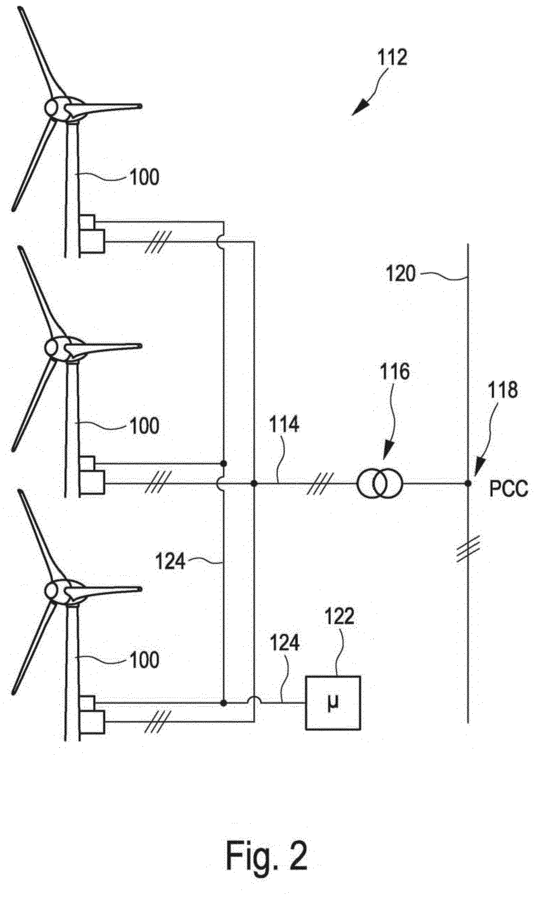

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

Figur 2 zeigt somit einen Windpark 112 mit exemplarisch drei dargestellten Windenergieanlagen 100. Diese drei Windenergieanlagen 100 können eine Anlagengruppe bilden. Somit kann der Windpark 112 insgesamt eine Anlagengruppe bilden. Jede dieser Windenergieanlagen 100 kann somit eine elektrische Leistung als Anlagenleistung erzeugen und diese Anlagenleistungen werden in dem Parknetz 114 aufaddiert, nämlich zu einer Gruppenleistung, und diese Gruppenleistung kann am Netzanschlusspunkt 118 in das elektrische Versorgungsnetz 120 eingespeist werden.

Um für diese Gruppenleistung eine Gruppenmaximalleistung vorgeben und einhalten zu können, kann zunächst eine solche Gruppenmaximalleistung von extern, beispielsweise von einem Netzbetreiber, an den zentralen Parkrechner 122 gegeben werden. Der zentrale Parkrechner 122 kann dann über einen Steuerzusammenhang einen Steuerwert bestimmen und über die Datenleitungen 124, oder alternativ kabellos, an die Windenergieanlagen 100 übertragen. Dazu kann in dem zentralen Parkrechner 122 ein Steuerzusammenhang ermittelt und dann für das Bestimmen des Steuerwertes verwendet werden. Der Steuerwert wird somit in dem Parkrechner 122 unter Verwendung des Steuerzusammenhangs, der dort auch bestimmt wurde, und in Abhängigkeit von der vorgegebenen Gruppenmaximalleistung bestimmt und an die Windenergieanlagen 100 übertragen.

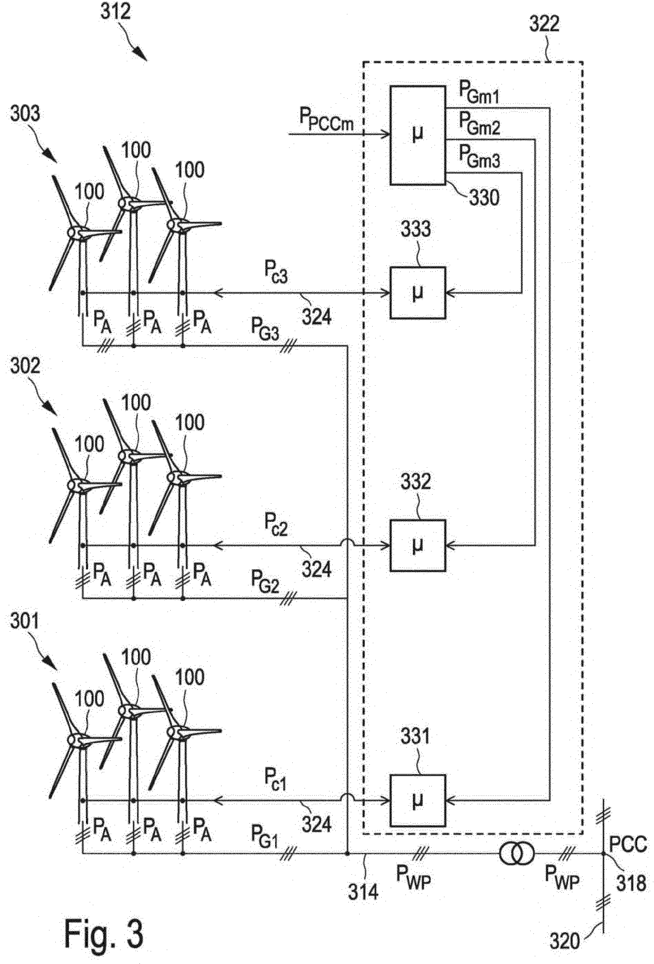

Figur 3 zeigt einen Windpark 312, der exemplarisch drei Anlagengruppen 301, 302 und 303 aufweist. Jede Anlagengruppe 301, 302 bzw. 303 weist jeweils mehrere Windenergieanlagen 100 auf. Gemäß Figur 3 enthält jede Anlagengruppe jeweils drei Windenergieanlagen, das ist aber nur exemplarisch zu verstehen, und jede Anlagengruppe kann eine andere Anzahl an Windenergieanlagen haben und insbesondere kann sich die Anzahl der Windenergieanlagen auch zwischen den Anlagengruppen unterscheiden. Es können auch mehr oder weniger Anlagengruppen vorhanden sein. Die Windenergieanlagen 100 können der Windenergieanlage 100 der Figur 1 bzw. jeweils einer Windenergieanlage 100 der Figur 2 entsprechen, sodass der Einfachheit halber auch in Figur 3 das Bezugszeichen 100 gewählt wurde. Die Windenergieanlagen 100 können sich aber auch unterscheiden, sowohl innerhalb einer Anlagengruppe als auch von einer Anlagengruppe zu anderen.

Jede Windenergieanlage 100 erzeugt eine Anlagenleistung $P_A$. Die jeweils erzeugten Anlagenleistungen $P_A$ können natürlich unterschiedlich sein und es wurde nur der Übersichtlichkeit halber von der Verwendung eines individuellen Indexes abgesehen. Die Summe der Anlagenleistungen $P_A$ jeweils einer Anlagengruppe 301, 302 bzw. 303 bildet die entsprechende Gruppenleistung $P_{G1}$, $P_{G2}$ bzw. $P_{G3}$. Diese Gruppenleistungen $P_{G1}$, $P_{G2}$ bzw. $P_{G3}$ werden ebenfalls im Parknetz 314 aufaddiert, nämlich zur Windparkleistung $P_{WP}$. Diese Windparkleistung $P_{WP}$ wird dann am Netzanschlusspunkt PCC in das elektrische Versorgungsnetz 320 eingespeist. Bei der veranschaulichenden Betrachtung gemäß Figur 3 werden etwaige Verlustleistungen vernachlässigt. Die am Netzanschlusspunkt PCC in das elektrische Versorgungsnetz 320 eingespeiste Windparkleistung $P_{WP}$ ist somit die Summe der Gruppenleistungen $P_{G1}$, $P_{G2}$ und $P_{G3}$.

Um nun die Windparkleistung $P_{WP}$ am Netzanschlusspunkt PCC, der auch mit dem Bezugszeichen 318 gekennzeichnet ist, zu begrenzen, kann von extern ein Begrenzungssignal vorgegeben werden, durch das eine Parkmaximalleistung $P_{PCCm}$ vorgegeben wird. Diese Parkmaximalleistung $P_{PCCm}$ kann dafür in ein Verteilmodul 330 eingegeben werden. Das Verteilmodul 330 kann diese Parkmaximalleistung $P_{PCCm}$ auf einzelne Teilmaximalleistungen, nämlich Gruppenmaximalleistungen $P_{Gm1}$, $P_{Gm2}$ und $P_{Gm3}$ aufgeteilt werden. Diese einzelnen Gruppenmaximalleistungen werden an entsprechende der jeweiligen Anlagengruppe zugeordnete Gruppenmodule 331, 332 und 333 übergeben.

Jedes dieser Gruppenmodule 331, 332 bzw. 333 bestimmt dann abhängig von der jeweils vorgegebenen Gruppenmaximalleistung $P_{Gm1}$, $P_{Gm2}$ bzw. $P_{Gm3}$ einen Steuerwert $P_{C1}$, $P_{C2}$ bzw. $P_{C3}$. Diese Steuerwerte werden dann an die jeweiligen Windenergieanlagen der betreffenden Anlagengruppe übertragen, nämlich über Datenleitungen 324, die der Einfachheit halber alle mit demselben Bezugszeichen versehen sind. Über diese Datenleitungen 324 können auch Informationen, besonders Statusinformationen, Betriebswerte und Messwerte, der einzelnen Windenergieanlagen erhalten werden.

Die Struktur des Verteilmoduls 330 zusammen mit den Gruppenmodulen 331, 332 bzw. 333 dient der Veranschaulichung, und diese Module können auch beispielsweise in einem Prozessrechner zusammengefasst sein. Jedenfalls können sie, ob nun eigenständig oder zusammengefasst, vorzugsweise zusammen Teil des zentralen Parkrechners 322 sein, der somit als gestricheltes Rechteck gezeichnet ist, das die Gruppenmodule und das Verteilmodul beinhaltet.

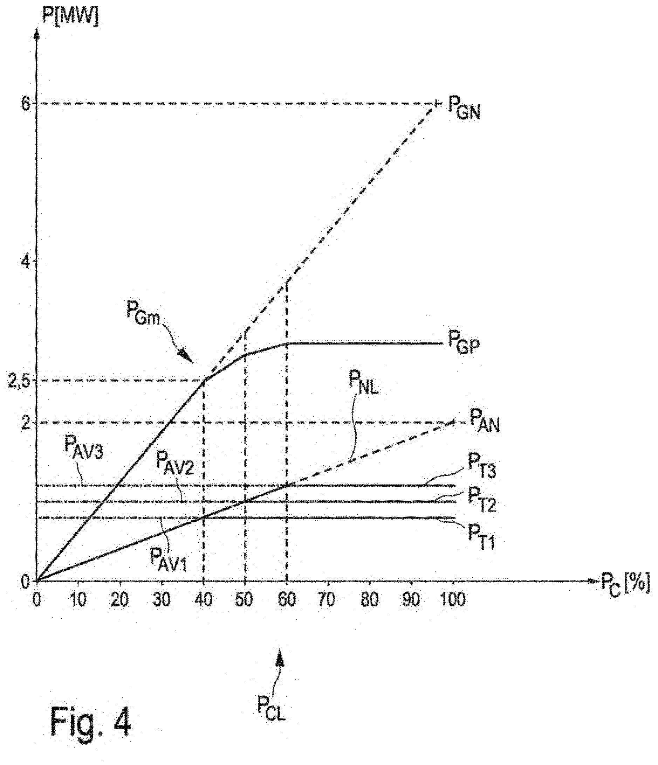

Figur 4 zeigt ein veranschaulichendes Diagramm, das den Steuerzusammenhang und seine Ermittlung erläutern soll. Der Figur 4 liegt ein vereinfachendes Beispiel einer Anlagengruppe mit drei Windenergieanlagen mit einer Nennleistung von je 2 MW zugrunde. Somit ergibt sich eine Nennleistung für die Gruppenleistung, also eine Gruppennennleistung, von 6 MW.

In dem Diagramm ist an der Abszisse der Steuerwert Pc in Prozent dargestellt. Die Steuerwerte von 0 - 100 % sind insoweit potentielle Steuerwerte, da sie jeweils als Steuerwert ausgewählt werden können. An der Ordinate ist Leistung P in MW abgetragen. Diese Leistung kann sich auf die Gruppenleistung oder auch auf eine einzelne Anlagenleistung beziehen, je nach dargestelltem Wert bzw. Werteverlauf. Dazu stellt der Verlauf der potentiellen Gruppenleistung $P_{GP}$ im Grunde das Ergebnis des zu ermittelnden Steuerzusammenhangs dar. Dieser Verlauf der potentiellen Gruppenleistung $P_{GP}$ berechnet sich wie folgt.

Zu jedem potentiellen Steuerwert Pc wird ein zugehöriger Wert der potentiellen Gruppenleistung $P_{GP}$ wie folgt berechnet. Dabei können beispielsweise 101 bzw. 100 Steuerwerte verwendet werden, nämlich von 0% bzw. 1% - 100 % in 1 %-Schritten.

Zu jedem potentiellen Steuerwert wird die potentielle Gruppenleistung als Summe zu dem betreffenden Steuerwert theoretisch erzeugbarer Leistung jeder der Windenergieanlagen der Anlagengruppe berechnet. Die theoretisch erzeugbare Leistung einer Windenergieanlage ist dabei entweder eine nominell begrenzte Leistung $P_{NL}$ oder eine verfügbare Leistung $P_{AV}$. Als theoretisch erzeugbare Leistung wird jeweils von der nominell begrenzten Leistung $P_{NL}$ und der verfügbaren Leistung $P_{AV}$ der kleinere Wert verwendet.

Die nominell begrenzte Leistung $P_{NL}$ ist das Produkt aus dem jeweiligen Steuerwert Pc und der Nennleistung der betreffenden Windenergieanlage. Damit bildet die nominell begrenzte Leistung $P_{NL}$ in dem Diagramm der Figur 4 eine Diagonale von dem Nullpunkt bis zu ihrer Nennleistung $P_{AN}$ bei einem Steuerwert von 100 %. Diese Diagonale ist in Figur 4 gestrichelt eingezeichnet, wobei die Strichelung teilweise von einer durchgezogenen Linie, auf die noch eingegangen wird, überdeckt wird. Da die hier exemplarisch untersuchten drei Windenergieanlagen dieselbe Anlagennennleistung haben, nämlich $P_{NL}$ = 2 MW, ergibt sich auch nur eine Diagonale.

Die verfügbare Leistung $P_{AV}$ ist diejenige Leistung, die die Windenergieanlage aufgrund der vorherrschenden Windbedingungen erzeugen könnte, wenn sie nicht gerade abgeregelt ist. Eine solche Abregelung könnte auch aus einem früheren oder aktuellen Wert einer vorgegebenen Gruppenmaximalleistung zur Begrenzung der Gruppenleistung herrühren. Wird die Windenergieanlage nicht abgeregelt betrieben, so ist die aktuell verfügbare Leistung die in dem Moment tatsächlich erzeugte Leistung. Insoweit kann dann anstelle der Berechnung der verfügbaren Leistung auch die tatsächlich erzeugte Leistung als verfügbare Leistung verwendet werden.

In dem illustrativen Beispiel der Figur 4 wird davon ausgegangen, dass die drei Windenergieanlagen unterschiedliche verfügbare Leistungen aufweisen. Das kann beispielsweise daran liegen, dass die Windenergieanlagen abhängig von ihrer Position im Windpark unterschiedlich starken Wind erhalten, weil beispielsweise eine der Windenergieanlagen an einer exponierteren Stelle steht als eine andere der Windenergieanlagen. Daher sind in Figur 4 auch entsprechend drei unterschiedliche verfügbare Leistungen eingezeichnet, nämlich als $P_{AV1}$, $P_{AV2}$ und $P_{AV3}$. Der Wert der jeweils verfügbaren Leistung hängt nicht von dem Steuerwert Pc ab und daher sind diese drei verfügbaren Leistungen $P_{AV1}$, $P_{AV2}$ und $P_{AV3}$ als waagerechte, strichpunktierte Linien eingezeichnet, sofern sie nicht von einer durchgezogenen Linie überdeckt sind.

Als theoretisch erzeugbare Leistung wird somit für jede einzelne Windenergieanlage zu jedem Steuerwert Pc jeweils zwischen nominell begrenzter Leistung $P_{NL}$ und verfügbarer Leistung $P_{AV1}$, $P_{AV2}$ und $P_{AV3}$ der kleinere Wert gewählt. Daraus ergeben sich die drei durchgezogenen Linien für die jeweilige theoretisch erzeugbare Leistung $P_{T1}$, $P_{T2}$ und $P_{T3}$. Diese Linien folgen nämlich zunächst der nominell begrenzten Leistung $P_{NL}$, und dann dem jeweiligen Wert der verfügbaren Leistung $P_{AV1}$, $P_{AV2}$ oder $P_{AV3}$.

Die potentielle Gruppenleistung $P_{GP}$ ist dann die Summe dieser drei einzelnen theoretisch erzeugbaren Leistungen. Sie berechnet sich nämlich als Summe dieser drei theoretisch erzeugbaren Leistungen für jeden Steuerwert Pc.

Das Ergebnis ist somit mit der Kennlinie der potentiellen Gruppenleistung $P_{GP}$ abhängig von dem potentiellen Steuerwert Pc darstellbar. Zur praktischen Umsetzung kann vorgesehen sein, dass die Werte dieser Kennlinie der potentiellen Gruppenleistung $P_{GP}$ zusammen mit dem jeweiligen potentiellen Steuerwert Pc als Wertepaare in einer Tabelle abgespeichert sind und diese Tabelle kann dann als Steuerzusammenhang angesehen werden.

Um nun abhängig von einer vorgegebenen Gruppenmaximalleistung einen zugehörigen Steuerwert Pc zu ermitteln, kann diese vorgegebene Gruppenmaximalleistung auf der in Figur 4 gezeigten Kennlinie für die potentielle Gruppenleistung $P_{GP}$ bzw. in einer entsprechenden Tabelle gesucht werden und der zugehörige potentielle Steuerwert Pc abgelesen und als Steuerwert Pc verwendet werden. Wird also beispielsweise als Gruppenmaximalleistung für das in Figur 4 veranschaulichte Beispiel ein Wert von 2,5 MW vorgegeben, so ergibt sich auf der Kennlinie der potentiellen Gruppenleistung $P_{GP}$ dieser Wert bei einem Steuerwert Pc bei 40 %. Dieses veranschaulichende Beispiel ist als Gruppenmaximalleistung $P_{Gm}$ in Figur 4 eingezeichnet.

Dem Verlauf der potentiellen Gruppenleistung $P_{GP}$ ist abzulesen, dass er ab einem potentiellen Steuerwert Pc nicht mehr ansteigt. Der zugehörige potentielle Steuerwert Pc wird als Grenzsteuerwert $P_{CL}$ bezeichnet und zusätzlich als Information abgespeichert. Die Beachtung dieses Grenzsteuerwertes $P_{CL}$ vermeidet, dass zu große Steuerwerte Pc verwendet werden, die aufgrund des waagerechten Bereichs des Verlaufs der Gruppenleistung $P_{GP}$ gar nicht mehr erreichbar wären. Vorzugsweise kann der Grenzsteuerwert $P_{CL}$ etwas größer gewählt werden als der erste Wert des Steuerwertes, ab dem sich die Gruppenleistung $P_{GP}$ nicht mehr erhöht. Dadurch kann erreicht werden, dass bei leichten Veränderungen der Leistungssituation die einzuspeisende Leistung versehentlich unnötig stark begrenzt wird.

Zur tatsächlichen Steuerung der Windenergieanlagen im Fall einer vorgegebenen Gruppenmaximalleistung kann ein entsprechender Steuerwert so bestimmt werden wie anhand der Figur 4 erläutert wurde. Der Steuerwert kann aber um einen variablen Anteil, besonders um einen Integralanteil, ergänzt werden. In diesem Fall kann sich der Steuerwert aus einem festen Anteil und einem variablen Anteil zusammensetzen. Der feste Anteil ergibt sich wie beschrieben aus der Figur 4. Nur der Einfachheit halber geht die Figur 4 und die vorstehend vorgenommenen Erläuterungen dazu von dem Steuerwert Pc insgesamt aus und spezifiziert nicht, dass tatsächlich der feste Teil des Steuerwertes gemäß Figur 4 ermittelt wird.

In dem Fall, in dem kein variabler Anteil verwendet wird, können der Steuerwert insgesamt und der feste Anteil des Steuerwertes identisch sein.

Der variable Anteil kann sich aus einer Regelung ergeben, nämlich insbesondere aus einem Soll-/Istwert-Vergleich, bei dem die vorgegebene Gruppenmaximalleistung mit der tatsächlich erzeugten Gruppenleistung verglichen wird. Vorzugsweise wird ein Regelfehler, der sich aus der Differenz zwischen besagtem Soll- und Istwert ergibt, über einen Regler gegeben, insbesondere über einen Integrator oder einen Regler, der einen Integrator umfasst.

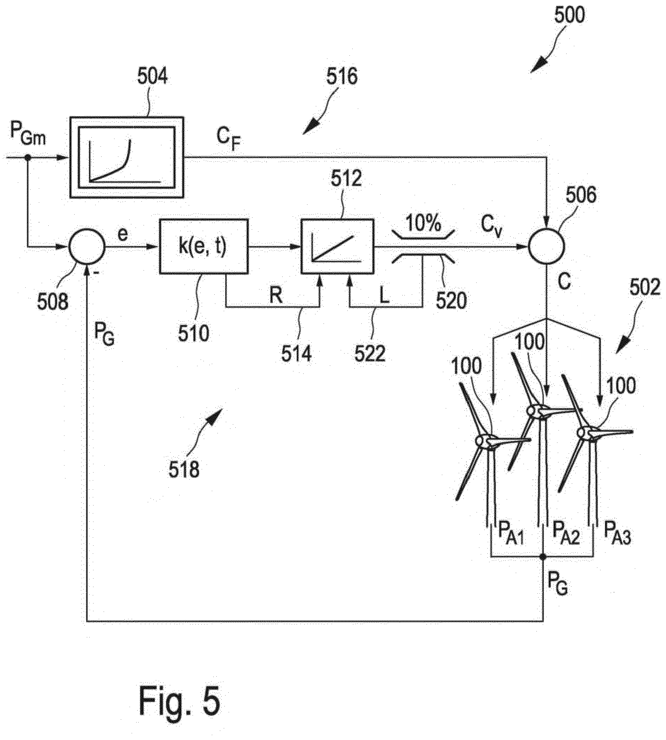

Figur 5 zeigt veranschaulichend eine Regelungsstruktur 500 zum Steuern einer Anlagengruppe 502. Mit der Regelungsstruktur 500 soll die Anlagengruppe 502 so gesteuert werden, dass sie eine vorgegebene Gruppenmaximalleistung $P_{Gm}$ einhält. Diese vorgegebene Gruppenmaximalleistung $P_{Gm}$ bildet somit eine Eingangsgröße bzw. einen Eingangswert für diese Regelungsstruktur. Diese vorgegebene Gruppenmaximalleistung $P_{Gm}$ wird dabei in den Steuerblock 504 eingegeben. Der Steuerblock 504 beinhaltet einen Steuerzusammenhang. Dieser Steuerzusammenhang ordnet einer eingegebenen Gruppenmaximalleistung einen Steuerwert zu. Dafür kann der Steuerblock 504 im Grunde einen zum Diagramm gemäß Figur 4 umgekehrten Zusammenhang bzw. umgekehrte Zuordnung zwischen potentieller Gruppenleistung und potentiellem Steuerwert aufweisen. Die Eingangsgröße des im Steuerblock 504 hinterlegten Zusammenhangs ist somit nicht der Steuerwert, sondern die Gruppenleistung. Das ist durch das Symbol in dem Steuerblock 504 angedeutet.

Es gibt somit eine klare Zuordnung zwischen eingegebener Gruppenleistung und resultierendem Steuerwert. Der resultierende Steuerwert ist somit fest und wird in der Regelungsstruktur 500 der Figur 5 somit als $C_F$ bezeichnet. Der Steuerblock 504 gibt somit einen festen Steueranteil $C_F$ eines Steuerwertes C aus. Der feste Steueranteil $C_F$ wird als prozentualer Wert ausgegeben. In dem Summierglied 506 wird der feste Steueranteil $C_F$ mit einem unten noch erläuterten variablen Steueranteil Cv zu dem Steuerwert C aufaddiert. Der variable Steueranteil Cv und auch der Steuerwert C sind ebenfalls als prozentuale Werte vorgesehen.

Der Steuerwert C wird dann an die einzelnen Windenergieanlagen 100 übergeben. Die einzelnen Windenergieanlagen 100 stellen daraufhin ihre Leistungserzeugung entsprechend ein und erzeugen jeweils eine Anlagenleistung $P_{A1}$, $P_{A2}$ und $P_{A3}$. Diese können gleich sein, dürften sich aber bereits aus praktischen Überlegungen heraus zumindest geringfügig unterscheiden. Sie werden zusammengeführt und bilden zusammen, also ihre Summe, die Gruppenleistung $P_G$. Diese Gruppenleistung $P_G$ wird natürlich auch in ein elektrisches Versorgungsnetz eingespeist, worauf es bei der Regelungsstruktur 500 der Figur 5 aber nicht ankommt, sodass dies nicht dargestellt wurde.

Die erzeugte Gruppenleistung $P_G$ wird zum Bestimmen des variablen Steueranteils Cv in dem Differenzglied 508 von der vorgegebenen Gruppenmaximalleistung $P_{Gm}$ abgezogen, sodass sich ein Regelfehler e bildet. Dieser Regelfehler e wird zunächst über einen Verstärkungsblock 510 mit variabler Verstärkung k (e, t) geführt. Das Ergebnis wird dann einem Integrator 512 zugeführt. Der variable Verstärkungsfaktor k (e, t) kann somit als integraler Verstärkungsfaktor bzw. Verstärkungsfaktor des Integrators 512 verstanden werden. Seine Inverse kann als Integrationszeitkonstante verstanden werden. Um aber die vielfältige Bedeutung dieses variablen Verstärkungsfaktors k (e, t) herauszustellen, ist dieser Verstärkungsblock 510 als separates Element gezeichnet.

Der variable Verstärkungsfaktor k (e, t) hängt somit von dem Regelfehler e ab und auch von der Zeit. Es wird also nicht nur der Regelfehler e mit einem Faktor k multipliziert, sondern ein solcher Faktor hängt zusätzlich auch von dem Regelfehler e ab. Insoweit kann auch von einer nichtlinearen Verstärkung gesprochen werden, weil sie von der Amplitude ihres Eingangssignals abhängt. Besonders wird vorgeschlagen, dass die Verstärkung umso größer gewählt wird, je größer der Betrag des Regelfehlers ist. Der variable Verstärkungsfaktor k (e, t) kann auch synonym als Integrationsfaktor bezeichnet werden.

Weiterhin ist der variable Verstärkungsfaktor k (e, t) von der Zeit abhängig, und diese Zeitabhängigkeit ist insbesondere so vorgesehen, dass der Verstärkungsfaktor k (e, t) nach einem Sprung des Regelfehlers zunächst einen sehr kleinen Wert annimmt, der auch null sein kann, oder weniger als 10 % eines ansonsten kleinsten Wertes der variablen Verstärkungsfaktors k (e, t) betragen kann. Hier ist besonders vorgesehen, diesen kleinen Wert oder sogar den Wert null, für einen kurzen Zeitraum von insbesondere 10 Sekunden oder kürzer vorzusehen. Dem liegt der Gedanke zugrunde, dass ein Sprung des Regelfehlers e nur durch einen Sprung der vorgegebenen Gruppenmaximalleistung $P_{Gm}$ entstehen kann, denn die tatsächlich erzeugte Parkleistung $P_G$ kann aus physikalischen Gründen nicht springen, abgesehen von dem Auslösen einer Sicherheitsvorrichtung, was aber ohnehin zu einem Fehler und Fehlersignal führen würde.

Ein Sprung des Regelfehlers e bedeutet also, dass ein neuer Wert für die Gruppenmaximalleistung vorgegeben wird. In dem Fall soll der Integrator 512 zunächst nicht aufintegrieren. Vorzugsweise kann vorgesehen sein, dass nach einem solchen Sprung des Regelfehlers e der Integrator 512 zusätzlich zurückgesetzt wird. Das ist durch eine Resetleitung 514 angedeutet. Das soll andeuten, dass der Verstärkungsblock 510, der einen solchen Sprung des Regelfehlers e erkannt hat, diese Information zudem an den Integrator 512 weitergibt, damit dieser zurückgesetzt, also resettet werden kann.

Jedenfalls ist der variable Verstärkungsfaktor k (e, t) eine kurze Zeit nach dem Sprung des Regelfehlers, also eine kurze Zeit nach einer Änderung der vorgegebenen Gruppenmaximalleistung, so klein, dass der Integrator 512 faktisch inaktiv ist. Idealerweise ergibt sich für die Zeit auch für den variablen Steueranteil Cv der Wert null, zumindest ein sehr kleiner Wert.

Die Bestimmung des festen Steueranteils $C_F$ ist aber nicht inaktiv, sondern dieser feste Steueranteil $C_F$ wird vielmehr sofort nach der Veränderung der Gruppenmaximalleistung gemäß dem hinterlegten Steuerzusammenhang neu berechnet. Unmittelbar nach der Änderung der vorgegebenen Gruppenmaximalleistung $P_{Gm}$ wird somit ein zugeordneter fester Steueranteil $C_F$ bestimmt und der sollte bereits ein recht guter Wert zum Steuern der Anlagengruppe 502 sein. Der gesamte Steuerwert C wird dann also zunächst, wenn der variable Steueranteil Cv null oder vernachlässigbar ist, dem festen Steueranteil $C_F$ entsprechen.

Die Windenergieanlagen 100 der Anlagengruppe 502 haben dann Zeit, ihre Anlagenleistung $P_{A1}$, $P_{A2}$ und $P_{A3}$ an den neuen gesamten Steuerwert C anzupassen. Mit anderen Worten soll zu Beginn einer geänderten Gruppenmaximalleistung zunächst nur der Steuerzweig 516 aktiv sein. Das verhindert, dass der Integrator 512 auf eine solche sprunghafte Änderung der vorgegebenen Gruppenmaximalleistung zu schnell einen großen Wert aufintegriert, der dann wieder zurückgeregelt werden muss. Mit anderen Worten soll am Anfang einer geänderten Gruppenmaximalleistung der Regelzweig 518 möglichst inaktiv sein. Damit wird erreicht, dass die vorgegebene Gruppenmaximalleistung im Wesentlichen durch den Steuerzweig und damit überhaupt durch eine Steuerung umgesetzt wird und der Regelzweig, insbesondere nämlich der integrale Regler, nur noch kleinere Abweichungen ausregelt, insbesondere eine stationäre Genauigkeit erreicht, die naturgemäß durch eine Steuerung kaum zu erreichen ist.

In diesem Sinne erzeugt der Integrator 512, nachdem die Anfangszeit vergangen ist, ein Ausgangssignal zum Ausregeln einer Restabweichung und zum Erreichen einer stationären Genauigkeit. Um zusätzlich sicherzugehen, dass der Integralanteil bzw. der Regelzweig 518 in der Umsetzung einer vorgegebenen Gruppenmaximalleistung nicht zu dominant wird, ist zudem ein Begrenzungsglied 520 vorgesehen. Dieses Begrenzungsglied 520 begrenzt somit den Ausgang des Integrators 512. Veranschaulichend ist dort der Wert von 10 % angegeben und der soll bedeuten, dass der variable Steueranteil Cv maximal 10 % betragen soll. Das ist allerdings ein Beispiel, und vorzugsweise kann vorgesehen sein, dass der variable Steueranteil Cv sogar nur maximal einen Wert von 5 % annehmen soll.

Das Begrenzungsglied 520 ist auch insoweit symbolisch zu verstehen, als nicht nur der Ausgang des Integrators 512 begrenzt werden soll, sondern auch der Integrator 512 selbst dann nicht weiter aufintegrieren soll. Dazu ist symbolisch eine Begrenzungsrückführung 522 vorgesehen, die veranschaulichen soll, dass diese Begrenzung der Ausgangsgröße tatsächlich überhaupt den Integrator 512 begrenzen, also limitieren soll.

Aspekte der Erfindung werden nachfolgend anhand weiterer Beispiele erläutert.

Das vorgeschlagene Verfahren umfasst zwei Komponenten:

1. Eine Steuerungskomponente, die mittels einer Hilfstabelle einen festen Steueranteil des Steuerwertes ermittelt, und

2. einen langsamen I-Regler, der noch den Feinabgleich unter Verwendung eines Soll-/Ist-Wert-Vergleichs durchführt und einen variablen Steueranteil des Steuerwertes ermittelt.

Es wird vorgeschlagen, dass eine zentrale Parksteuerung zu allen Windenergieanlagen im Windpark ein und denselben Steuerwert für die einzustellende Wirkleistung sendet. Dieser Steuerwert wird als Rundruf, der auch als Broadcast bezeichnet werden kann, an alle Windenergieanlagen verteilt. Er wird als Steuerwert bezeichnet, ist aber aufgrund der windabhängigen Leistungsabgabe der Windenergieanlagen eigentlich ein Leistungslimitierungswert (Pmax). Denn die Windenergieanlage kann ihre Leistung limitieren, aber nicht beliebig erhöhen. Die maximal auszubringende Leistung ist in erster Linie vom Wind abhängig und danach noch von weiteren Begrenzungen, wie bspw. einzuhaltender Scheinleistung, einzuhaltender Temperaturen, einzuhaltender Schallvorgaben, einer technischen Verfügbarkeit, usw.

Es ist aber auch möglich, dass die Windenergieanlagen eines Windparks in mehrere Anlagengruppen aufgeteilt werden, was auch als Clusterregelung bezeichnet werden kann. Dort ist der Gedanke, dass der Windpark virtuell in Gruppen aufgeteilt wird und jede Gruppe einen eigenen Vorgabewert bekommt, nämlich eigenen Gruppenmaximalwert, was auch einen Pmax-Wertdarstellt.

Die Idee der Steuerung über einen Steuerzusammenhang, der in einer Tabelle hinterlegt sein kann, die als Hilfstabelle bezeichnet werden kann, funktioniert für beide Arten der Regelung: Sowohl bei einem Steuerwert für alle, als auch bei der Clusterregelung.

Weitere Information: Der Steuerwert zu den Windenergieanlagen ist ein prozentualer Sollwert und bezieht sich jeweils auf die Nennleistung der jeweiligen Anlage.

Die Ermittlung der Hilfstabelle für den festen Steueranteil kann wie folgt durchgeführt werden.

Die zentrale Parksteuerung kommuniziert ständig mit jeder Windenergieanlage. Steuerwerte werden gesendet und aktuelle Betriebsdaten werden empfangen. Ein komplettes Abbild der relevanten Daten aus dem Windpark dauert bis zu 1 s.

Für dieses Verfahren sind 3 Größen relevant:

1. Die Verfügbarkeit der Windenergieanlage sagt aus, ob die Windenergieanlage in Ordnung und bereit zur Einspeisung ist. Hierunter fällt auch, ob die Kommunikation mit der zentralen Parksteuerung in Ordnung ist, usw.

2. Die aktuelle Anlagenleistung bezeichnet die aktuell eingespeiste Wirkleistung der Windenergieanlage.

3. Die verfügbare Leistung der Windenergieanlage gibt die verfügbare Wirkleistung der Windenergieanlage an, die die Windenergieanlage also erzeugen und einspeisen könnte, wenn sie keine Begrenzungen zu beachten hätte.

Dabei liefert die Windenergieanlage die folgenden 4 Signale:

- Die aktuell aus vorherrschendem Wind erzeugbare Leistung.

- Eine technisch verfügbare Leistung, die aktuelle technische Gegebenheiten berücksichtigt, wie z.B., dass bei einem deaktivierten Umformer, die technisch verfügbare Wirkleistung abnehmen kann.

- Eine abhängig extremer Umweltbedingungen, wie einem Sturm, noch erzeugbare bzw. einspeisbare Leistung, die somit auch als von höherer Gewalt abhängige Leistung bezeichnet werden kann.

- Eine von extern vorgegebene Maximalleistung, die eine unter Berücksichtigung von extern vorgegebener Begrenzung oder Abregelung maximal verfügbare Leistung bezeichnet. Dazu gehört auch eine durch Vorgabe einer Gruppenmaximalleistung verursachte Begrenzung bzw. Abregelung.

Vorzugsweise kann auch eine Nennleistung jeder Windenergieanlage übertragen werden, wobei eine seltene Übertragung, z.B. nur einmal täglich, reicht.

Die für das vorgeschlagene Verfahren relevante verfügbare Leistung ist der Minimalwert aus der aktuell aus vorherrschendem Wind erzeugbaren Leistung, der technisch verfügbaren Leistung und der als von höherer Gewalt abhängigen Leistung. Die von extern vorgegebene Maximalleistung begrenzt den als verfügbare Leistung verwendeten Wert nicht, weil darin der Steuerwert des vorgeschlagenen Steuerverfahrens hier selbst mit eingeht und dadurch verfälscht wird.

Kontinuierlich und unabhängig von der Ausführung des Leistungsreglers wird im Hintergrund eine Tabelle erstellt, nämlich der Steuerzusammenhang. Diese Tabelle umfasst jeweils 2 Informationen. Einen virtuellen Steuerwert (von 0 bis 100%), der auch synonym als potentieller Steuerwert bezeichnet werden kann, und zum anderen eine theoretische Wirkleistungsabgabe aller Windenergieanlagen passend zu dem Steuerwert, die als potentielle Gruppenleistung bezeichnet werden kann.

Dazu wird wie folgt vorgegangen:

In einem Durchgang wird jeweils ein potentieller Steuerwert vorgegeben, z.B. 10%. Dann wird für alle Windenergieanlagen die theoretische Leistung berechnet. Dazu wird überprüft, ob die Windenergieanlage verfügbar ist. Wenn ja, dann wird der potentielle Steuerwert mit der Nennleistung der Windenergieanlage multipliziert, so dass ein Leistungsabsolutwert entsteht. Diese Leistung wird mit der verfügbaren Wirkleistung, die auch einfach als verfügbare Leistung bezeichnet werden kann, verglichen. Der kleinere Leistungswert wird als theoretische Leistung angenommen. Diese Berechnung wird über alle Anlagen im Windpark, bzw. der Anlagengruppe, gemacht und aufsummiert. Am Ende steht in der Tabelle bei einem potentiellen Steuerwert von 10% eine potentielle Gruppenleistung als Summe der theoretischen Wirkleistungen aller Windenergieanlagen im Park von XXX kW, z.B. 1870 kW. Bei dem nächsten Durchlauf wird der virtuelle Steuerwert bzw. potentielle Steuerwert erhöht z.B. auf 11% und es wird wieder die Berechnung durchgeführt. Die Summe aller theoretischen Leistungen, also die potentielle Gruppenleistung, könnte dann z.B. 2050 kW sein. Diese Berechnung wird für alle virtuellen Steuerwerte bzw. potentiellen Steuerwerte von 0% bis 100% getätigt.

Im Hintergrund bildet sich eine Tabelle, in der zu allen virtuellen Steuerwerten bzw. potentiellen Steuerwerten ein Wert der potentiellen Gruppenleistung entsteht.

Nach einem kompletten Durchgang wird eine zusätzliche Tabelle für eine vereinfachte Suche gefüllt. Diese Tabelle kann als Referenztabelle bezeichnet werden und hat wiederum je 2 Einträge und gibt in 10%-Schritten, besonders bezogen auf die installierte Leistung der Anlagengruppe, die die Summe der Nennleistungen aller Windenergieanlagen im Park bezeichnet, den Startindex für die erste Tabelle. Dies wird für eine vereinfachte Suche vorgeschlagen, damit nicht während der Reglerberechnung die komplette erste Tabelle 1 durchsucht werden muss. Sollte die Leistung durch Wind oder sonstige Bedingungen begrenzt sein, wird am Ende der maximale Leistungssollwert einer Windenergieanlage, bezogen auf deren Nennleistung normiert, als Grenzsteuerwert, vorzugsweise zuzüglich einer Reserve, abgespeichert. Das kann so erfolgen, dass von da ab die Tabelle bis zum letzten Eintrag mit dem Grenzsteuerwert aufgefüllt wird.

Es ergibt sich eine Funktion, die als Eingang eine Soll-Leistung bzw. Maximalleistung, nämlich Gruppenmaximalleistung, besonders als Absolutwert bekommt und als Ausgang einen idealen Steuerwert zurück liefert.

In dieser Funktion wird die Soll-Leistung auf die installierte Leistung normiert und mit Hilfe der Tabelle 2 der Startindex für die Tabelle 1 ermittelt.

Dann beginnt ein Suchalgorithmus in Tabelle 1, der den bestmöglichen Steuerwert ermittelt.

Dazu wird ab dem Startindex, jeder Wert der Summe der theoretischen Leistungswerte, also jeder Wert der potentiellen Gruppenleistung, betrachtet und mit der Soll-Leistung verglichen. Eine weitere Bedingung ist, dass sich der Wert der potentiellen Gruppenleistung gegenüber dem vorherigen Index ebenfalls erhöhen muss. Ansonsten hätte man den Endwert erreicht. Also sollte der Leistungswert zu dem vorherigen Index sich erhöhen und der Leistungswert noch unterhalb der Soll-Leistung sein, wird der Index erhöht. Sollte eine der Bedingungen nicht erfüllt sein, wird abgebrochen. In den Hilfsvariablen steht der Index, der Wert der potentiellen Gruppenleistung, also die Summe der theoretischen Leistungswerte zu dem Index, wo aber der Leistungswert kleiner der Soll-Leistung ist, und der potentielle Gruppenwert, wo der Wert größer als die Soll-Leistung ist. Der ideale Steuerwert wird dann zwischen diesen Werten linear interpoliert.

Als Ergebnis aus der Funktion wird dieser Steuerwert zurückgegeben.

Zur Veranschaulichung anbei die Tabellen und ein Rechenbeispiel (alles idealisiert):

Die installierte Leistung Pinst berechnet sich als Summe der Nennleistungen aller Windenergieanlagen im Park bzw. der Anlagengruppe.

Als Beispiel wird ein Park mit 5 Windenergieanlagen mit je 2000kW Nennleistung + 5 Windenergieanalgen mit je 3000kW angenommen.

Es berechnet sich die installierte Leistung Pinst = 5 * 2000kW + 5 * 3000kW = 25000kW.

Die höchste verfügbare Leistung, normiert auf die Nennleistung einer Windenergieanlage, hier im Beispiel eine mit einer Nennleistung von 3000kW, beträgt 1740 kW => 1740kW * 100% /3000kW + 5% Reserve= 63%. Das ist somit der Grenzsteuerwert.

Bei einem Steuerwert von 63% würde keine der Windenergieanlagen begrenzt laufen, denn alle verfügbaren Anlagenleistungen liegen unterhalb von 63%.

Beispiel der Tabelle1 (der Index entspricht dem potentiellen Steuerwert):

| Index | Steuerwert | Summe Theoretischer Leistungen (potentielle Gruppenleistung) |
|-------|-----------|---------------------------------------------------------------|
| 0     | 0%        | 0KW                                                           |

(fortgesetzt)

| Index | Steuerwert | Summe Theoretischer Leistungen (potentielle Gruppenleistung) |
|---|---|---|
| 1 | 1% | 250kW |
| 2 | 2% | 500kW |
| ... | ... | ... |
| 50 | 50% | 12500kW |
| 51 | 51% | 12800kW |
| 52 | 52% | 13050kW |
| 53 | 53% | 13300kW |
| 54 | 54% | 13500kW |
| 55 | 55% | 13700kW |
| 56 | 56% | 13880kW |
| 57 | 57% | 13950kW |
| 58 | 58% | 14000kW |
| 59 | 59% | 14000kW |
| ... | ... | ... |
| 100 | 100% | 14000kW |

Detaillierte Beschreibung zur Ermittlung der theoretischen Leistung an einem Beispiel für einen virtuellen Steuerwert, bzw. potentiellen Steuerwert von 2%.

Windenenergieanalgen können synonym auch als WEA bezeichnet werden. Es wird angenommen, dass an WEA 1 ein Steuerwert von 2 % gesendet wird. Die WEA hat eine Nennleistung von 2000kW * 2% = 40kW. Die verfügbare Leistung ist größer als 40 kW. Somit wird die 40kW als theoretische Leistung angenommen. Die WEAs 1 bis 5 sind gleich. Die WEA 6 hat eine Nennleistung von 3000kW. 3000kW * 2% = 60kW. Auch hier ist die verfügbare Leistung größer als 60kW. Dasselbe gilt für die restlichen WEAs 7-10. Daraus resultiert eine Gesamtleistung von 5 WEAs à 40kW + 5 WEAs à 60kw = 500kW Summe theoretischer Leistung, also potentielle Gruppenleistung. Dieser Wert wird in die Tabelle eingetragen. Danach erfolgt dieselbe Berechnung mit einem virtuellen bzw. potentiellen Stellwert von 3% und so weiter bis hin zu 100%.

Am Ende liefert die Tabelle 1 zu jedem potentiellen Steuerwert eine Summe theoretischer Gesamtanlagenleistungen, als eine potentielle Gruppenleistung. Allerdings wird diese Tabelle aus Reglersicht genau anders herum benötigt. Der Regler möchte zu einer gewissen Leistung den Steuerwert haben. Hierzu dient die Tabelle 2: In 10%-Schritten liefert die Tabelle 2 einen geeigneten Einsprung für die Tabelle 1, damit nicht die gesamte Tabelle durchsucht werden muss. Dazu gibt die Tabelle für eine potentielle Gruppenleistung den Start-Index gleich den Start-Steuerwert wieder.

Hinweis: Ab Index 6 findet man den maximalen Steuerwert. Oben wurde bereits dieser Wert anhand der maximal verfügbaren Leistung einer WEA aus dem Park ermittelt. Wenn dieser Steuerwert gesendet wird, speisen alle Anlagen ihre maximal verfügbare Leistung in das Netz ein. Mehr geht nicht.

Tabelle 2

| Index | Psoll in % von Pinst | Startindex Tabelle 1 |
|---|---|---|
| 0 | 0% | 0 |
| 1 | 10% | 10 |
| 2 | 20% | 20 |
| 3 | 30% | 30 |
| 4 | 40% | 40 |
| 5 | 50% | 50 |

(fortgesetzt)

| Index | Psoll in % von Pinst | Startindex Tabelle 1 |
|---|---|---|
| 6 | 60% | 63 |
| 7 | 70% | 63 |
| 8 | 80% | 63 |
| 9 | 90% | 63 |
| 10 | 100% | 63 |

Beispielhafte Ermittlung des Steuerwertes für eine Leistung von z.B. 13550kW:

Vorgegebene Gruppenmaximalleistung, bzw. P_Soll %= 13550kW * 100% / 25000kW = 54,2%. Index 5

Berechnung: P_Soll_% / 10 und abrunden 54,2% / 10 und abrunden = 5

Tabelle 2 Index 5 liefert einen Startindex von 50 für die Tabelle 1.
Tabelle 1, Startindex 50 liefert eine potentielle Gruppenleistung von 12500 kW.
Der Index wird sukzessive erhöht, bis die Sollleistung, also die vorgegebene Gruppenmaximalleistung von 13550kW erreicht wird.

| 54 | 54% | 13500kW (P_temp1) |
|---|---|---|
| 55 | 55% | 13700kW (P_temp2) |

Index 54 ist kleiner als die Solleistung und Index 55 ist größer. Zwischen den beiden Werten wird linear interpoliert und ein Steuerwert mit einer 0,1% Genauigkeit ermittelt:

$$\text{Steuerwert} = (\text{Index\_P\_temp1}) + (\text{Psoll-P\_temp1}) * 10 / (\text{P\_temp2- P\_temp1})$$

Steuerwert = 54%     + (13550kW -13500kW) / (13700 -13500)
Steuerwert = 54 %    + 0.25 -+ Aufrunden und auf 0,1% genau = 54,3%

Die Funktion liefert dann einen idealen Steuerwert von 54,3% zurück.
Bei einer gleichverteilten Windsituation im Park ist die Tabelle 1 bis zur maximal verfügbaren Leistung relativ linear. Siehe Beispiel. Allerdings bei extrem Standorten z.B. 2 WEAs im Tal und einer WEA auf einem Berg, ist die Verteilung sehr unterschiedlich, und dafür bietet das Vorgeschlagene eine gute Lösung.
Zur Erläuterung des Reglers:
Wie eingehend beschrieben funktioniert der Regler mit 2 Komponenten: Der Steuerungsanteil mit Hilfe der Tabelle und einer langsamen I-Regelung für den Feinabgleich.
Zuerst wird der Steuerungsanteil ermittelt, also der feste Steueranteil. Dazu wird die einzuspeisende Leistung berechnet.
Die Leistung die der Windpark einspeisen soll, berechnet sich aus dem Soll-Leistungswert am Netzverknüpfungspunkt, der auch als Netzanschlusspunkt bezeichnet werden kann, z.B. durch Vorgabe durch einen Netzbetreiber, und der Verlustleistung im Windpark. Die Verlustleistung im Windpark kann z.B. durch die Verluste in den Kabeln, Transformatoren, Eigenbedarf oder gar eine kleine Fabrik entstehen. Die Verlustleistung könnte auch negativ werden. Z.B. wenn noch unbekannte Erzeuger im Windpark integriert sind oder gar eine Windenergieanlage im Park keine Datenbuskommunikation zur zentralen Parksteuerung hat und dennoch eine vorgegebene Leistung von z.B. 40% einspeist.
Die Verlustleistung wird in der zentralen Parksteuerung wie folgt berechnet:

P_Verluste = Summe aktueller WEA-Leistungen aus dem Windpark (Summe

P_WEA_Aktuell) – aktueller Leistung (Paktuell) am Netzverknüpfungspunkt.

Zur Erläuterung wird das Beispiel von oben aufgegriffen: Der Windpark läuft unlimitiert und speist eine maximale Leistung von 14000kW in das Netz ein. Die zentrale Parksteuerung misst am Netzverknüpfungspunkt eine Leistung von 13450kW.

P_Verluste = (14000kW) -13450kW = 550kW. Die Verluste sind etwas größer, da vielleicht noch ein Hochspannungstransformator und einige Stationen mit im Park verbaut sind.

Der Regler bekommt vom Energieversorger einen Sollwert von 13000kW übergeben.

Um die 13000kW an dem Netzverknüpfungspunkt zu erreichen, müssten alle Windenergieanlagen zusammen eine Leistung von 13000kW (Vorgabe Energieversorger) + 550kW (Park Verluste) einspeisen. An die Tabellenfunktion wird daher der ideale Sollwert für eine Summen-WEA-Leistung von 13550kW angefragt. Die Funktion von oben liefert dann den idealen Steuerwert von 54,3% zurück, der somit einen festen Steueranteil des Steuerwertes bildet.

Es ist zu beachten, dass sich durch eine Veränderung von Wirk- oder Blindleistung der Windenergieanlagen, auch die Parkverluste verändern können. Theoretisch könnte man den Einfluss der Verluste durch Leistungsänderungen berücksichtigen und man würde bei großen Sollwertänderungen einen noch besseren Steuerwert erhalten. Es wurde aber erkannt, dass dies nicht mit berücksichtigt zu werden braucht. Besonders wurde erkannt, dass dadurch, dass kontinuierlich die Verlustleistung im Park berechnet wird, sich dieser Fehler schnell wieder rausrechnet.

Der Regler addiert zu diesem idealen Steuerwert, also dem festen Steueranteil, noch einen I-Anteil drauf, nämlich einen variablen Steueranteil.

Der I-Anteil wie folgt berechnet:
Es wird eine Leistungsdifferenz gebildet und auf die Parknennleistung normiert ((Sollleistung - Istleistung) / Prated). Bei einer Regeldifferenz von größer 6% wird ein I-Anteil, der synonym als Integrationsfaktor bezeichnet werden kann, von 1.0 verwendet. Bei einer Regeldifferenz von größer 3% ein I-Anteil von 0.3 und kleiner als 3% nur einen I-Anteil von 0.1.

Der I-Anteil wird auf +-10% (= +- 0.10pu) begrenzt. Der I-Anteil soll nur zum Ausgleich von Ungenauigkeiten im Bereich von +-10% nachregeln.

Zudem wird bei einem größeren Sollwertsprung von 8% der I-Anteil nur auf 0,0001 gesetzt. Damit soll der Windenergieanlage Zeit gegeben werden, um auf den idealen Steuerwert zu reagieren. Den Windenergieanlagen wird dafür eine Zeit von 4 Sekunden zur Verfügung gestellt. Zudem wird bei einem Sollwertsprung nach unten, einer Regeldifferenz von 8% und wenn der I-Anteil an sein positives Limit gelaufen ist, auf 0 zurück initialisiert.

Zudem wird für diesen Regler eine Zurücksetzung eines Ausgangswertes des Integrators vorgeschlagen. Diese greift, sobald die ausgebrachte Ist-Leistung um 0.6% größer als der Sollwert ist und die zurückgemeldete maximale Ist-Leistung (in pu) von einer WEA (P_Max WEC_pu) größer als der Gesamtsteuerwert (Idealer Steuerwert aus der Tabelle + I-Anteil) ist. Dann wird der I-Anteil auf den P_Max WEC-Pu - idealer Steuerwert initialisiert. Auch hierbei wird der I-Anteil auf +-10% limitiert.

Der Gesamtsteuerwert, also der Steuerwert, setzt sich aus dem idealen Steuerwert, also dem festen Steueranteil, zuzüglich dem I-Anteil, also dem variablen Steuerteil, zusammen und wird zum Windpark gesendet.

**Patentansprüche**

**1.**   Verfahren zum Steuern einer mehrere Windenergieanlagen (100) aufweisende Anlagengruppe, wobei

- jede der Windenergieanlagen (100) elektrische Leistung als Anlagenleistung ($P_A$) zum Einspeisen in ein elektrisches Versorgungsnetz (120, 320) erzeugt,
- die Anlagengruppe eine Gruppenleistung ($P_G$) an einem Netzanschlusspunkt (118, 318) in das elektrische Versorgungsnetz (120, 320) einspeist, wobei

- die Gruppenleistung im Wesentlichen aus einer Summe aller Anlagenleistungen ($P_A$) der Anlagengruppe gebildet wird,

- zum Begrenzen der Gruppenleistung eine Gruppenmaximalleistung vorgegeben wird,
- zum Einhalten der Gruppenmaximalleistung ein Steuerwert an jede Windenergieanlage (100) der Anlagengruppe übertragen wird, um die Anlagenleistung der jeweiligen Windenergieanlage (100) auf einen durch den Steuerwert definierten Maximalwert zu beschränken,
- zum Bestimmen des Steuerwertes ein Steuerzusammenhang als Zusammenhang zwischen potentiellen Steuerwerten (Pc) und potentiellen Gruppenleistungen ($P_{GP}$) ermittelt wird, und

- der Steuerwert

- unter Verwendung des Steuerzusammenhangs und
- in Abhängigkeit der vorgegebenen Gruppenmaximalleistung ($P_{Gm}$) bestimmt wird und wobei

- der Steuerzusammenhang als Tabelle von Wertetupeln hinterlegt ist, und
- jeder Wertetupel einen potentiellen Steuerwert (Pc) und eine potentielle Gruppenleistung ($P_{GP}$) enthält, und/oder dass
- der Steuerzusammenhang zusätzlich einen Grenzsteuerwert ($P_{CL}$) enthält, der repräsentativ für den kleinsten Steuerwert steht, bei dem die zugeordnete Gruppenleistung ihren aktuellen Maximalwert erreicht hat, wobei sich der Grenzsteuerwert vorzugsweise aus dem Wert dieses kleinsten Steuerwertes zuzüglich eines Reservewertes zusammensetzt und/oder
- der Steuerwert als relativer Wert angegeben wird, insbesondere als prozentualer Wert, besonders bezogen auf eine Nennleistung.

2. Verfahren nach Anspruch 1, **dadurch gekennzeichnet, dass**

- zum Erstellen des Steuerzusammenhangs

- sukzessive für mehrere potentielle Steuerwerte (Pc) von einem vorgebbaren ersten potentiellen Steuerwert bis zu einem vorgebbaren letzten potentiellen Steuerwert
- zu jedem potentiellen Steuerwert (Pc) eine potentielle Gruppenleistung ($P_{GP}$) ermittelt wird, wobei
- die potentielle Gruppenleistung ($P_{GP}$) für den jeweiligen potentiellen Steuerwert (Pc) als Summe theoretisch erzeugbarer Leistung ($P_T$) jeder der Windenergieanlagen (100) der Anlagengruppe berechnet wird, wobei
- die theoretisch erzeugbare Leistung einer Windenergieanlage (100) in Abhängigkeit bestimmt wird von

- einer nominell begrenzten Leistung ($P_{NL}$), die sich aus einer Nennleistung der Windenergieanlage (100) und dem potentiellen Steuerwert (Pc) berechnet, insbesondere als Produkt daraus, und
- einer verfügbaren Leistung ($P_{AV}$), die eine aktuell von der Windenergieanlage (100) erzeugbare elektrische Leistung bezeichnet, wobei insbesondere

- als theoretisch erzeugbare Leistung von der nominell begrenzten Leistung ($P_{NL}$) und der verfügbaren Leistung ($P_{AV}$) der kleinere Wert verwendet wird.

3. Verfahren nach Anspruch 1 oder 2, **dadurch gekennzeichnet, dass**

- der Steuerzusammenhang innerhalb vorgebbarer Zeitabstände aktualisiert wird, wobei insbesondere
- die Zeitabstände kleiner als eine Minute gewählt werden.

4. Verfahren nach einem der vorstehenden Ansprüche, **dadurch gekennzeichnet, dass**

- ein Referenzzusammenhang ermittelt wird, wobei
- als Referenzzusammenhang aus dem Steuerzusammenhang ein Zusammenhang zwischen potentiellen Gruppenleistungen und potentiellen Steuerwerten ermittelt wird, um mittels des Referenzzusammenhangs aus einer vorgegebenen Gruppenmaximalleistung ($P_{Gm}$) einen Steuerwert zu erhalten, wobei insbesondere
- der Zusammenhang nur für einige der potentiellen Steuerwerte (Pc) bestimmt wird, indem von den potentiellen Steuerwerten (Pc) des Steuerzusammenhangs nur jeder n-te potentielle Steuerwert (Pc) verwendet wird, mit n als ganze Zahl von 2 bis 100, um

- in einem ersten Zuordnungsschritt einen schnellen ersten Zusammenhang zwischen einer vorgegebenen Gruppenleistung und einem in erster Näherung zugeordneten potentiellen Steuerwert zu finden und
- in einem zweiten Zuordnungsschritt basierend auf dem in erster Näherung zugeordneten potentiellen Steuerwert (Pc) und dem Steuerzusammenhang einen genauer zugeordneten potentiellen Steuerwert (Pc) zu bestimmen und zu verwenden, wobei vorzugsweise
- in dem zweiten Zuordnungsschritt eine Interpolation zwischen zwei potentiellen Steuerwerten des Steuerzusammenhangs durchgeführt wird.

**5.** Verfahren nach einem der vorstehenden Ansprüche, **dadurch gekennzeichnet, dass**

- die Bestimmung des Steuerzusammenhangs in einem zentralen Gruppenrechner für die gesamte Anlagengruppe durchgeführt wird,
- der Gruppenrechner dazu benötigte Werte einschließlich Betriebswerte regelmäßig von den Windenergieanlagen (100) der Anlagengruppe erhält,
- der Gruppenrechner den Steuerwert bestimmt und
- an alle Windenergieanlagen (100) der Anlagengruppe überträgt.

**6.** Verfahren nach einem der vorstehenden Ansprüche, **dadurch gekennzeichnet, dass**

- sich der Steuerwert aus einem festen Steueranteil ($C_F$) und einem variablen Steueranteil (Cv) zusammensetzt, wobei

  - der feste Steueranteil ($C_F$) unter Verwendung des Steuerzusammenhangs und in Abhängigkeit der vorgegebenen Gruppenmaximalleistung ($P_{Gm}$) bestimmt wird und
  - der variable Steueranteil ($C_V$) in Abhängigkeit eines Soll-/Istwert-Vergleichs zwischen

    - der vorgegebenen Gruppenmaximalleistung ($P_{Gm}$) und
    - der am Netzanschlusspunkt (118, 318) eingespeisten Gruppenleistung

bestimmt wird, wobei insbesondere vorgesehen ist, dass der variable Steueranteil (Cv) maximal auf ein Zehntel eines Maximalwertes des Steuerwertes begrenzt ist.

**7.** Verfahren nach Anspruch 6, **dadurch gekennzeichnet, dass**

- der Soll-/Istwert-Vergleich als Regelfehler berücksichtigt wird, insbesondere als normierter Wert, und
- der variable Steueranteil (Cv) einen Integralanteil des Regelfehlers aufweist, wobei
- der Integralanteil aus dem Regelfehler über eine Integration mit einem Integrationsfaktor bestimmt wird, und insbesondere

  - der Integrationsfaktor (k(e,t)) von der Amplitude des Regelfehlers abhängt, wobei der Integrationsfaktor vorzugsweise umso größer gewählt wird, je größer der Betrag des Regelfehlers ist.

**8.** Verfahren nach Anspruch 7, **dadurch gekennzeichnet, dass**

- der Integralanteil auf einen Bruchteil eines Maximalwertes des Steuerwertes begrenzt wird, wobei

  - der Bruchteil vorzugsweise im Bereich von 5% bis 20% des Maximalwertes des Steuerwertes liegt, insbesondere 10% des Maximalwertes des Steuerwertes beträgt, und/oder

- der variable Steueranteil (Cv) nach einer Änderung der vorgegebenen Gruppenmaximalleistung ($P_{Gm}$), insbesondre nach einer Änderung um einen Wert größer als eine vorgegebene Änderungsgrenze, zeitverzögert bestimmt und/oder aufgeschaltet wird, zumindest vollständig erst zeitverzögert bestimmt und/oder aufgeschaltet wird, wobei die Zeitverzögerung im Bereich von 1 bis 20 Sekunden liegt, insbesondere im Bereich von 2 bis 10 Sekunden.

**9.** Verfahren nach einem der Ansprüche 6 oder 7, **dadurch gekennzeichnet, dass** der variable Steueranteil (Cv) mit Hilfe eines Integrators (512) bestimmt wird und bei einer Veränderung, insbesondere sprunghaften Veränderung der Gruppenmaximalleistung ein Ausgangswert des Integrators (512) zurückgesetzt wird.

**10.** Verfahren zum Steuern eines mehrere Anlagengruppen (301, 302, 303) aufweisenden Windparks (112, 312), wobei

- zum Steuern jeder Anlagengruppe (301, 302, 303) ein Verfahren nach einem der vorstehenden Ansprüche verwendet wird und
- zum Begrenzen einer an dem Netzanschlusspunkt (118, 318) eingespeisten Parkleistung eine Parkmaximalleistung ($P_{PCCm}$) vorgegeben wird und
- die Parkmaximalleistung ($P_{PCCm}$) nach einer Verteilvorschrift in mehrere Teilmaximalleistungen aufgeteilt wird und

- jede der Anlagengruppen (301, 302, 303) eine der mehreren Teilmaximalleistungen als Gruppenmaximalleistung ($P_{C1}$, $P_{C2}$, $P_{C3}$) vorgegeben bekommt und
- jede der Anlagengruppen (301, 302, 303) abhängig der Gruppenmaximalleistung gemäß einem Verfahren nach einem der Ansprüche 1 bis 10 gesteuert wird.

11. Verfahren nach Anspruch 10, **dadurch gekennzeichnet, dass**

- die Verteilvorschrift die Parkmaximalleistung ($P_{PCCm}$) in Abhängigkeit

    - einer Gruppennennleistung jeder Anlagengruppe,
    - eines Status jeder Anlagengruppe und/oder
    - eines Betriebszustandes jeder Anlagengruppe in die Teilmaximalleistungen aufteilt.

12. Anlagengruppe, die mehrere Windenergieanlagen (100) aufweist, wobei

- ein Gruppenrechner mit einer Gruppensteuerung vorgesehen ist, zum Steuern der Anlagengruppe,
- jede der Windenergieanlagen (100) elektrische Leistung als Anlagenleistung zum Einspeisen in ein elektrisches Versorgungsnetz (120, 320) erzeugt,
- die Anlagengruppe eine Gruppenleistung an einem Netzanschlusspunkt in das elektrische Versorgungsnetz (120, 320) einspeist, wobei

    - die Gruppenleistung im Wesentlichen aus einer Summe aller Anlagenleistungen der Anlagengruppe gebildet wird, und

- die Gruppensteuerung dazu vorbereitet ist, dass
- zum Begrenzen der Gruppenleistung eine Gruppenmaximalleistung vorgegeben wird,
- zum Einhalten der Gruppenmaximalleistung ein Steuerwert an jede Windenergieanlage (100) der Anlagengruppe übertragen wird, um die Anlagenleistung der jeweiligen Windenergieanlage (100) auf einen durch den Steuerwert definierten Maximalwert zu beschränken,
- zum Bestimmen des Steuerwertes ein Steuerzusammenhang als Zusammenhang zwischen potentiellen Steuerwerten (Pc) und potentiellen Gruppenleistungen ($P_{GP}$) ermittelt wird, und
- der Steuerwert

    - unter Verwendung des Steuerzusammenhangs und
    - in Abhängigkeit der vorgegebenen Gruppenmaximalleistung bestimmt wird, und wobei

- der Steuerzusammenhang als Tabelle von Wertetupeln hinterlegt ist, und

    - jeder Wertetupel einen potentiellen Steuerwert (Pc) und eine potentielle Gruppenleistung ($P_{GP}$) enthält, und/oder dass
    - der Steuerzusammenhang zusätzlich einen Grenzsteuerwert ($P_{CL}$) enthält, der repräsentativ für den kleinsten Steuerwert steht, bei dem die zugeordnete Gruppenleistung ihren aktuellen Maximalwert erreicht hat, wobei sich der Grenzsteuerwert vorzugsweise aus dem Wert dieses kleinsten Steuerwertes zuzüglich eines Reservewertes zusammensetzt und/oder

- der Steuerwert als relativer Wert angegeben wird, insbesondere als prozentualer Wert, besonders bezogen auf eine Nennleistung.

13. Anlagengruppe, nach Anspruch 12, **dadurch gekennzeichnet, dass** die Anlagengruppe, insbesondere der Gruppenrechner und/oder die Gruppensteuerung dazu vorbereitet sind, ein Verfahren nach einem der Ansprüche 1 bis 9 durchzuführen.

14. Windpark (112, 312) mit mehreren Anlagengruppen (301, 302, 303) gemäß Anspruch 12 oder 13, umfassend

- den Netzanschlusspunkt (118, 318), und
- einen zentralen Parkrechner (122, 322) vorbereitet zum Durchführen eines Verfahrens nach Anspruch 10 oder 11.

**Claims**

1. A method of controlling a wind turbine group having a plurality of wind turbines (100), wherein

   - each of the wind turbines (100) generates electrical power as wind turbine output power ($P_A$) for feeding into an electrical supply network (120, 320),
   - the wind turbine group feeds a group power output ($P_G$) into the electrical supply network (120, 320) at a grid connection point (118, 318), wherein

      - the group power output is substantially formed as the sum of all the wind turbine power outputs ($P_A$) of the wind turbine group,

   - a maximum group power output is specified to limit the group power output,
   - to comply with the maximum group power output a control value is transferred to each wind turbine (100) in the wind turbine group in order to limit the output power of the respective wind turbine (100) to a maximum value defined by said control value,
   - a control relationship is determined as a relationship between potential control values (Pc) and potential group power outputs ($P_{GP}$), in order to specify the control value, and
   - the control value

      - is determined using the control relationship and
      - depending on the specified maximum group power output ($P_{Gm}$), and wherein

   - the control relationship is stored as a table of value tuples, and
   - each value tuple contains a potential control value (Pc) and a potential group power output ($P_{GP}$), and/or in that
   - the control relationship contains a threshold control value ($P_{CL}$) which is representative of the smallest control value at which the associated group power output has reached its current maximum value, wherein the threshold control value is preferably composed of the value of said smallest control value plus a reserve value and/or
   - the control value is specified as a relative value, in particular as a percentage value, especially in relation to a nominal power.

2. The method according to claim 1, **characterized in that**,

   - in order to produce the control relationship

      - successively for a plurality of potential control values (Pc) from a predefinable first potential control value to a predefinable last potential control value,
      - a potential group power output ($P_{GP}$) is calculated for each potential control value (Pc), wherein
      - the potential group power output ($P_{GP}$) for the respective potential control value (Pc) is calculated as the sum of the power outputs ($P_T$) that can theoretically be generated by each of the wind turbines (100) in the wind turbine group, wherein
      - the power output that can theoretically be generated by a wind turbine (100) is calculated depending on
      - a nominally limited power output ($P_{NL}$) which is calculated using the nominal power of the wind turbine (100) and the potential control value (Pc), in particular as a product, and
      - an available power output ($P_{AV}$) denoting an electrical power output which can currently be generated by the wind turbine (100), wherein, in particular,

         - the smaller of the nominally limited power output ($P_{NL}$) and the available power output ($P_{AV}$) is used as the power output that can theoretically be generated.

3. The method according to claim 1 or 2, **characterized in that**

   - the control relationship is updated within predefinable time intervals, wherein, in particular,
   - time intervals of less than one minute are chosen.

4. The method according to any one of the preceding claims, **characterized in that**

   - a reference relationship is determined, wherein

- a relationship between potential group power outputs and potential control values is determined as the reference relationship on the basis of the control relationship, in order to obtain a control value from a specified maximum group power output ($P_{Gm}$) by means of the reference relationship, wherein, in particular,
- the relationship is determined only for some of the potential control values (Pc), by using only every n-th potential control value (Pc) from the potential control values (Pc) of the control relationship, where n is an integer from 2 to 100, in order to

- find, in a first assignment step, a quick first relationship between a specified group power output and a potential control value assigned in a first approximation and
- determine, in a second assignment step based on the potential control value (Pc) assigned in said first approximation and on the control relationship, a more precisely assigned potential control value (Pc) and to use said control value, wherein preferably
- an interpolation between two potential control values of the control relationship is performed in the second assignment step.

5. The method according to any one of the preceding claims, **characterized in that**

- the control relationship is determined in a central group computer for the whole wind turbine group,
- the group computer receives the required values, including operating values, on a regular basis from the wind turbines (100) in the wind turbine group,
- the group computer determines the control value and
- transfers it to all the wind turbines (100) in the wind turbine group.

6. The method according to any one of the preceding claims, **characterized in that**

- the control value is composed of a fixed control term ($C_F$) and a variable control term (Cv), wherein

- the fixed control term ($C_F$) is determined using the control relationship and as a function of the specified maximum group power output ($P_{Gm}$), and
- the variable control term (Cv) is determined as a function of a setpoint/actual value comparison between

- the specified maximum group power output ($P_{Gm}$) and
- the group power output fed to the grid at the grid connection point (118, 318),

wherein in particular it is provided that the variable control term (Cv) being limited to a maximum of one tenth of the maximum value of the control value.

7. The method according to claim 6, **characterized in that**

- the setpoint/actual comparison of values is taken into account as a control error, in particular as a normed value, and
- the variable control term (Cv) includes an integral term of the control error, wherein
- the integral term obtained from the control error is determined by integration using an integration factor, and in particular such that

- said integration factor (k(e,t)) depends on the amplitude of the control error, wherein the integration factor is preferably selected as being all the greater, the greater the magnitude of the control error.

8. The method according to claim 7, **characterized in that**

- the integral term is limited to a fraction of a maximum value of the control value, wherein

- the fraction is preferably in the range between 5% and 20% of the maximum value of the control value, in particular 10% of the maximum value of the control value, and/or

- the variable control term (Cv), after a change in the specified maximum group power output ($P_{Gm}$), in particular after a change by a value greater than a specified change limit, is determined and/or supplied with a time delay, or at least is completely determined and/or supplied with a time delay initially, wherein the time delay ranges between 1 and 20 seconds, in particular in the range between 2 and 10 seconds.

9.  The method according to any one of claims 6 or 7, **characterized in that**
the variable control term (Cv) is determined with the aid of an integrator (512) and an output value of the integrator (512) is reset whenever there is a change, in particular an abrupt change, in the maximum group power output.

10.  A method of controlling a wind farm (112, 312) having a plurality of wind turbine groups (301, 302, 303), wherein

- a method according to any one of the preceding claims is used to control each wind turbine group (301, 302, 303) and
- a maximum farm power output ($P_{PCCm}$) is specified in order to limit a farm power output fed to the grid at the grid connection point (118, 318) and
- the maximum farm output power ($P_{PCCm}$) is subdivided into a plurality of maximum power output fractions in accordance with a distribution rule and,
- each of the wind turbine groups (301, 302, 303) receives one of the plurality of maximum power output fractions as the specified maximum group power output ($P_{C1}$, $P_{C2}$, $P_{C3}$) and
- each of the wind turbine groups (301, 302, 303) is controlled according to a method according to any one of claims 1 to 10, depending on the maximum group power output.

11.  The method according to claim 10, **characterized in that**

- the distribution rule splits the maximum farm output power ($P_{PCCm}$) into the maximum power output fractions, depending on

- a nominal group power output of each wind turbine group,
- a status of each wind turbine group and/or
- an operational condition of each wind turbine group.

12.  A wind turbine group having a plurality of wind turbines (100), wherein

- a group computer having a group controller is provided to control the wind turbine group,
- each of the wind turbines (100) generates electrical power as wind turbine output power for feeding into an electrical supply network (120, 320),
- the wind turbine group feeds a group power output into the electrical supply network (120, 320) at a grid connection point, wherein

- the group power output is substantially formed as the sum of all the turbine power outputs of the wind turbine group, and

- the group controller is configured such that
- a maximum group power output is specified for limiting the group power output,
- a control value for compliance with the maximum group power output is transferred to each wind turbine (100) in the wind turbine group in order to limit the output power of the respective wind turbine (100) to a maximum value defined by said control value,
- a control relationship is determined as a relationship between potential control values ($P_C$) and potential group power outputs ($P_{GP}$), in order to specify the control value, and
- the control value

- is determined using the control relationship and
- depending on the specified maximum group power output,

and wherein
- the control relationship is stored as a table of value tuples, and
- each value tuple contains a potential control value ($P_C$) and a potential group power output ($P_{GP}$), and/or in that
- the control relationship contains a threshold control value ($P_{CL}$) which is representative of the smallest control value at which the associated group power output has reached its current maximum value, wherein the threshold control value is preferably composed of the value of said smallest control value plus a reserve value and/or
- the control value is specified as a relative value, in particular as a percentage value, especially in relation to a nominal power.

**13.** A wind turbine group according to claim 12, **characterized in that** the wind turbine group, in particular the group computer and/or the group controller, is/are configured to perform a method according to any one of claims 1 to 9.

**14.** A wind farm (112, 312) having a plurality of wind turbine groups (301, 302, 303) according to claim 12 or 13, said wind farm including

- the grid connection point (118, 318), and
- a central wind farm computer (122, 322) configured to perform a method according to claim 10 or 11.

**Revendications**

**1.** Procédé pour commander un groupe d'éoliennes présentant plusieurs éoliennes (100), dans lequel

- chacune des éoliennes (100) produit de la puissance électrique comme puissance d'éoliennes ($P_A$) à injecter dans un réseau d'alimentation électrique (120, 320),
- le groupe d'éoliennes injecte une puissance de groupe ($P_G$) sur un point de raccordement au réseau (118, 318) dans le réseau d'alimentation électrique (120, 320), dans lequel

  - la puissance de groupe est formée sensiblement d'une somme de toutes les puissances d'éoliennes ($P_A$) du groupe d'éoliennes,

- pour limiter la puissance de groupe, une puissance maximale de groupe est prédéfinie,
- pour maintenir la puissance maximale de groupe, une valeur de commande est transmise à chaque éolienne (100) du groupe d'éoliennes, afin de restreindre la puissance d'éolienne de l'éolienne (100) respective à une valeur maximale définie par la valeur de commande,
- pour déterminer la valeur de commande, un rapport de commande est établi en tant que rapport entre des valeurs de commande potentielles ($P_C$) et des puissances de groupe potentielles ($P_{GP}$), et
- la valeur de commande est déterminée

  - au moyen du rapport de commande et
  - en fonction de la puissance maximale de groupe ($P_{GM}$) prédéfinie

et dans lequel
- le rapport de commande est mis en mémoire en tant que tableau de tuples de valeurs, et
- chaque tuple de valeurs contient une valeur de commande potentielle ($P_C$) et une puissance de groupe potentielle ($P_{GP}$), et/ou que
- le rapport de commande contient en plus une valeur de commande limite ($P_{CL}$), qui est représentative de la plus petite valeur de commande pour laquelle la puissance de groupe associée a atteint sa valeur maximale actuelle, dans lequel la valeur de commande limite se compose de préférence de la valeur de cette plus petite valeur de commande plus une valeur de réserve et/ou
- la valeur de commande est indiquée en tant que valeur relative, en particulier en tant que valeur en pourcentage, en particulier par rapport à une puissance nominale.

**2.** Procédé selon la revendication 1, **caractérisé en ce que**

- pour établir le rapport de commande,

  - successivement pour plusieurs valeurs de commande potentielles ($P_C$) à partir d'une première valeur de commande potentielle pouvant être prédéfinie jusqu'à une dernière valeur de commande potentielle pouvant être prédéfinie
  - une puissance de groupe potentielle ($P_{GP}$) est établie pour chaque valeur de commande potentielle ($P_C$), dans lequel
  - la puissance de groupe potentielle ($P_{GP}$) pour la valeur de commande potentielle ($P_C$) respective est calculée en tant que somme de la puissance pouvant être produite théoriquement ($P_T$) de chacune des éoliennes (100) du groupe d'éoliennes, dans lequel

- la puissance pouvant être produite théoriquement d'une éolienne (100) est déterminée en fonction
- d'une puissance limitée de façon nominale ($P_{NL}$), qui se calcule à partir d'une puissance nominale de l'éolienne (100) et de la valeur de commande potentielle ($P_C$), en particulier en tant que produit de celles-ci, et
- d'une puissance disponible ($P_{AV}$), qui désigne une puissance électrique pouvant être produite actuellement par l'éolienne (100), dans lequel en particulier

- en tant que puissance pouvant être produite théoriquement, parmi la puissance limitée de façon nominale ($P_{NL}$) et la puissance disponible ($P_{AV}$) la plus petite valeur est utilisée.

3. Procédé selon la revendication 1 ou 2, **caractérisé en ce que**

- le rapport de commande est actualisé pendant des intervalles de temps pouvant être prédéfinis, dans lequel en particulier
- les intervalles de temps sont choisis pour être inférieurs à une minute.

4. Procédé selon l'une quelconque des revendications précédentes, **caractérisé en ce que**

- un rapport de référence est établi, dans lequel
- un rapport entre les puissances de groupe potentielles et les valeurs de commande potentielles est établi en tant que rapport de référence à partir du rapport de commande, afin d'obtenir une valeur de commande au moyen du rapport de référence à partir d'une puissance maximale de groupe ($P_{GM}$) prédéfinie, dans lequel en particulier
- le rapport est déterminé seulement pour certaines des valeurs de commande potentielles ($P_C$), du fait que parmi les valeurs de commande potentielles ($P_C$) du rapport de commande seule chaque $n^{ième}$ valeur de commande potentielle ($P_C$) est utilisée, avec n en tant que nombre entier de 2 à 100, afin

- dans une première étape d'association de trouver un premier rapport rapide entre une puissance de groupe prédéfinie et une valeur de commande potentielle associée en première approximation et
- dans une deuxième étape d'association sur la base de la valeur de commande potentielle ($P_C$) associée en première approximation et du rapport de commande pour déterminer et pour utiliser une valeur de commande potentielle ($P_C$) associée exacte, dans lequel de préférence
- dans la deuxième étape d'association une interpolation est mise en oeuvre entre deux valeurs de commande potentielles du rapport de commande.

5. Procédé selon l'une quelconque des revendications précédentes, **caractérisé en ce que**

- la détermination du rapport de commande est mise en oeuvre dans un calculateur de groupe central pour tout le groupe d'éoliennes,
- le calculateur de groupe obtient régulièrement des éoliennes (100) du groupe d'éoliennes des valeurs nécessaires à cet effet y compris des valeurs de fonctionnement,
- le calculateur de groupe détermine la valeur de commande et
- la transmet à toutes les éoliennes (100) du groupe d'éoliennes.

6. Procédé selon l'une quelconque des revendications précédentes, **caractérisé en ce que**

- la valeur de commande se compose d'une fraction de commande fixe ($C_F$) et d'une fraction de commande variable ($C_V$), dans lequel

- la fraction de commande fixe ($C_F$) est déterminée au moyen du rapport de commande et en fonction de la puissance maximale de groupe ($P_{GM}$) prédéfinie et
- la fraction de commande variable ($C_V$) est déterminée en fonction d'une comparaison valeur théorique/réelle entre

- la puissance maximale de groupe ($P_{GM}$) prédéfinie et
- la puissance de groupe injectée sur le point de raccordement au réseau (118, 318),

dans lequel il est prévu en particulier que la fraction de commande variable ($C_V$) soit limitée à un dixième d'une valeur maximale de la valeur de commande.

**7.** Procédé selon la revendication 6, **caractérisé en ce que**

- la comparaison valeur théorique/réelle est prise en compte en tant qu'erreur de réglage, en particulier en tant que valeur normalisée, et
- la fraction de commande variable ($C_V$) présente une fraction intégrale de l'erreur de réglage, dans lequel
- la fraction intégrale est déterminée à partir de l'erreur de réglage par l'intermédiaire d'une intégration avec un facteur d'intégration, et en particulier

- le facteur d'intégration ($k(e, t)$) dépend de l'amplitude de l'erreur de réglage, dans lequel le facteur d'intégration est choisi de préférence pour être d'autant plus important que la grandeur de l'erreur de réglage est importante.

**8.** Procédé selon la revendication 7, **caractérisé en ce que**

- la fraction intégrale est limitée à une petite partie d'une valeur maximale de la valeur de commande, dans lequel

- la petite partie se situe de préférence dans la plage de 5 % à 20 % de la valeur maximale de la valeur de commande, en particulier 10 % de la valeur maximale de la valeur de commande, et/ou
- la fraction de commande variable ($C_V$) est déterminée et/ou appliquée de façon retardée, est déterminée et/ou appliquée au moins entièrement uniquement de façon retardée, après une modification de la puissance maximale de groupe ($P_{GM}$) prédéfinie, en particulier après une modification d'une valeur supérieure à une limite de modification prédéfinie, dans lequel le retard se situe dans la plage de 1 à 20 secondes, en particulier dans la plage de 2 à 10 secondes.

**9.** Procédé selon l'une quelconque des revendications 6 ou 7, **caractérisé en ce que** la fraction de commande variable ($C_V$) est déterminée à l'aide d'un intégrateur (512) et lors d'une modification, en particulier brusque modification de la puissance maximale de groupe, une valeur initiale de l'intégrateur (512) est réinitialisée.

**10.** Procédé pour commander un parc éolien (112, 312) présentant plusieurs groupes d'éoliennes (301, 302, 303), dans lequel

- pour commander chaque groupe d'éoliennes (301, 302, 303), un procédé selon l'une quelconque des revendications précédentes est utilisé et
- pour limiter une puissance de parc injectée sur le point de raccordement au réseau (118, 318), une puissance maximale de parc ($P_{PCCm}$) est prédéfinie et
- la puissance maximale de parc ($P_{PCCm}$) est divisée après une instruction de distribution en plusieurs puissances maximales partielles et
- chacun des groupes d'éoliennes (301, 302, 303) reçoit de manière prédéfinie une des plusieurs puissances maximales partielles en tant que puissance maximale de groupe ($PC_1$, $PC_2$, $PC_3$) et
- chacun des groupes d'éoliennes (301, 302, 303) est commandé en fonction de la puissance maximale de groupe conformément à un procédé selon l'une quelconque des revendications 1 à 10.

**11.** Procédé selon la revendication 10, **caractérisé en ce que**

- l'instruction de distribution de la puissance maximale de parc ($P_{PCCm}$) est divisée en fonction

- d'une puissance nominale de groupe de chaque groupe d'éoliennes,
- d'un statut de chaque groupe d'éoliennes et/ou
- d'un état de fonctionnement de chaque groupe d'éoliennes

en les puissances maximales partielles.

**12.** Groupe d'éoliennes, qui présente plusieurs éoliennes (100), dans lequel

- un calculateur de groupe est pourvu d'une commande de groupe, pour commander le groupe d'éoliennes,
- chacune des éoliennes (100) produit une puissance électrique en tant que puissance d'éolienne à injecter dans un réseau d'alimentation électrique (120, 320),

- le groupe d'éoliennes injecte une puissance de groupe sur un point de raccordement au réseau dans le réseau d'alimentation électrique (120, 320), dans lequel

- la puissance de groupe est formée sensiblement d'une somme de toutes les puissances d'éolienne du groupe d'éoliennes, et

- la commande de groupe est destinée à ce que
- pour limiter la puissance de groupe, une puissance maximale de groupe soit prédéfinie,
- pour maintenir la puissance maximale de groupe, une valeur de commande est transmise à chaque éolienne (100) du groupe d'éoliennes, afin de restreindre la puissance d'éolienne de l'éolienne (100) respective à une valeur maximale définie par la valeur de commande,
- pour déterminer la valeur de commande, un rapport de commande est établi en tant que rapport entre des valeurs de commande potentielles ($P_C$) et des puissances de groupe potentielles ($P_{GP}$), et
- la valeur de commande est déterminée

- au moyen du rapport de commande et
- en fonction de la puissance maximale de groupe prédéfinie

et dans lequel

- le rapport de commande est mis en mémoire en tant que tableau de tuples de valeurs, et

- chaque tuple de valeurs contient une valeur de commande potentielle ($P_C$) et une puissance de groupe potentielle ($P_{GP}$), et/ou que
- le rapport de commande contient en plus une valeur de commande limite ($P_{CL}$), qui est représentative de la plus petite valeur de commande pour laquelle la puissance de groupe associée a atteint sa valeur maximale actuelle, dans lequel la valeur de commande limite se compose de préférence de la valeur de cette plus petite valeur de commande plus une valeur de réserve et/ou

- la valeur de commande est indiquée en tant que valeur relative, en particulier en tant que valeur en pourcentage, en particulier par rapport à une puissance nominale.

13. Groupe d'éoliennes selon la revendication 12, **caractérisé en ce que** le groupe d'éoliennes, en particulier le calculateur de groupe et/ou la commande de groupe, sont destinés à mettre en oeuvre un procédé selon l'une quelconque des revendications 1 à 9.

14. Parc éolien (112, 312) avec plusieurs groupes d'éoliennes (301, 302, 303) selon la revendication 12 ou 13, comprenant

- le point de raccordement au réseau (118, 318), et
- un calculateur de parc central (122, 322) destiné à mettre en oeuvre un procédé selon la revendication 10 ou 11.

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- US 20170335824 A1
- EP 2876768 A1